# EUROPEAN PATENT APPLICATION

(11) **EP 4 554 272 A1**
(43) Date of publication of application: **14.05.2025**
(21) Application number: 23834684.5
(22) Date of filing: 28.06.2023
(51) Int. Cl.: H04W 24/02

(54) **METHOD AND APPARATUS FOR PROCESSING SUCCESSFUL HANDOVER REPORT**

(30) Priority: 08.07.2022 CN 202210806908
(71) Applicant: Datang Mobile Communications Equipment Co., Ltd., Beijing 100085 (CN)
(72) Inventor: WANG, Ruiwei, Beijing 100085 (CN); YAN, Xue, Beijing 100085 (CN); YAN, Nan, Beijing 100085 (CN)
(74) Representative: Studio Torta S.p.A.
(86) International application number: PCT/CN2023/103259
(87) International publication number: WO 2024/007916

(57) **Abstract**

The present disclosure provides a method and apparatus for processing a successful handover report. The method comprises: a terminal acquiring configuration information of a first trigger condition for generating a successful handover report of a primary secondary cell; if an additional SN is accessed by the terminal or the primary secondary cell is changed, generating a first successful handover report according to the configuration information, if it is determined that the first triggering condition is met; sending the first successful handover report to a first MN accessed by the terminal

## Description

### CROSS-REFERENCE TO RELATED APPLICATION

This disclosure claims priority to Chinese Patent Application No. 202210806908.6 filed in China on July 8, 2022, the disclosure of which is hereby incorporated by reference in its entirety.

### TECHNICAL FIELD

The present disclosure relates to the field of communications technologies, and in particular, to a method and a device for processing a successful handover report.

### BACKGROUND

In a multi-connectivity architecture, user equipment (UE) may be connected to a master node (MN), and connected to a plurality of secondary nodes (SN), and perform signaling and/or data interaction with the network nodes. Both the MN node and the SN node may be Long Term Evolution (LTE)/e-LTE/new radio (NR) nodes. In a case that there is one MN node and one SN node, it may be referred to as a dual connection (DC). In a Multi-RAT Dual Connectivity (MR-DC) scenario, a terminal and a network-side device cannot implement recording and analysis of a problem of SN addition or Primary Secondary Cell (PSCell) change.

### SUMMARY

An objective of the present disclosure is to provide a method and a device for processing a successful handover report, which solve the problem that a terminal and a network side device cannot realize recording and analysis of a problem of adding an SN or changing a PSCell in an MR-DC scenario.

A method for processing a successful handover report is provided. The method includes:
obtaining, by a terminal, configuration information of a first trigger condition for generating a successful handover report of a primary secondary cell;
in case of addition of a secondary node SN accessed by the terminal or change of the primary secondary cell, generating a first successful handover report, according to the configuration information, when determining that the first trigger condition is met; and
sending the first successful handover report to a first master node MN accessed by the terminal.

In another embodiment of the present disclosure, the first trigger condition includes:
that a current value of a timer is greater than a threshold of the timer when the terminal successfully accesses a first primary secondary cell.

In another embodiment of the present disclosure, the first successful handover report includes one of the following:
related information of the primary secondary cell;
related information of a primary cell accessed by the terminal and related information of the primary secondary cell accessed by the terminal;
related information of a primary cell accessed by the terminal.

In another embodiment of the present disclosure, the related information of the primary secondary cell includes one or more of the following:
a report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of accessing a first primary secondary cell by the terminal;
trigger node information in case of SN addition;
trigger node information during change of the primary secondary cell.

In another embodiment of the present disclosure, generating the first successful handover report when determining that the first trigger condition is met includes:
when determining that the first trigger condition is met and when a second trigger condition of a successful handover report of the primary cell is met, recording related information of the primary cell; and
generating the first successful handover report according to the related information of the primary cell.

In another embodiment of the present disclosure, when determining that the first trigger condition is met and the second trigger condition of the successful handover report of the primary cell is met, recording the related information of the primary cell includes one of the following:
if time of determining that the second trigger condition is met is earlier than time of determining that the first trigger condition is met, then recording the related information of the primary cell;
if time of determining that the first trigger condition is met is earlier than time of determining that the second trigger condition is met, then recording the related information of the primary secondary cell when the first trigger condition is met, and when the second trigger condition is met, recording the related information of the primary cell and deleting the related information of the primary secondary cell.

In another embodiment of the present disclosure, after generating the first successful handover report, the method further includes:
sending first information to a first target network node, wherein the first information indicates that the terminal has generated the first successful handover report;
the sending the first successful handover report to the first master node MN accessed by the terminal includes:
   receiving a terminal information obtaining request message sent by a first MN;
   sending a response message to the first MN, wherein the response message includes the first successful handover report.

In another embodiment of the present disclosure, the first information is carried by one or more of following messages:
a radio resource control (RRC) connection establishment complete message;
an RRC connection re-establishment complete message;
an RRC connection reconfiguration complete message;
an RRC connection resume complete message.

In another embodiment of the present disclosure, the sending the first information to the first target network node includes one of the following:
sending the first information to the first MN;
if the change of the primary secondary cell is change of the primary secondary cell in the SN triggered by the SN, sending the first information to the SN;
if the change of the primary secondary cell is change of the primary secondary cell in the MN triggered by the MN, sending the first information to the first MN.

In another embodiment of the present disclosure, the first information is sent after the terminal successfully accesses a first primary secondary cell and generates the first successful handover report.

In another embodiment of the present disclosure, after generating the first successful handover report, the method further includes:
encoding the first successful handover report according to an access technology of accessing a first MN by the terminal; or
encoding the first successful handover report according to an access technology of accessing a target SN by the terminal;
wherein the access technology of the first MN is same as or different from the access technology of the target SN.

In another embodiment of the present disclosure, the method further includes:
receiving a conditional synchronization reconfiguration message, wherein the conditional synchronization reconfiguration message includes a candidate primary secondary cell list and an execution condition corresponding to triggering the terminal to access a candidate primary secondary cell;
performing the addition of the SN or the change of the primary secondary cell in a case that the execution condition is met.

In another embodiment of the present disclosure, the first successful handover report includes one or more of the following information:
the candidate primary secondary cell list;
the execution condition corresponding to triggering the terminal to access the candidate primary secondary cell;
time length information between first time and second time, the first time being time when the conditional synchronization reconfiguration message is received for last time before the execution condition is met, and the second time being time when determining that the execution condition is met.

In another embodiment of the present disclosure, the first successful handover report includes:
association information related to the first successful handover report;
identification information, wherein the identification information is used to indicate that the addition of the SN or the change of the primary secondary cell is implemented through a conditional synchronization reconfiguration.

A method for processing a successful handover report is provided. The method includes:
obtaining, by a second MN, a first successful handover report, wherein the first successful handover report is generated by a terminal in case of addition of a SN accessed by the terminal or change of a primary secondary cell and when a first trigger condition is met;
determining, by the second MN according to a trigger reason of the first successful handover report, a second target network node that needs to perform optimization; and
sending, by the second MN, the first successful handover report to the second target network node.

In another embodiment of the present disclosure, the obtaining a first successful handover report includes one of the following:
receiving the first successful handover report sent by the terminal;
receiving the first successful handover report sent by the first MN.

In another embodiment of the present disclosure, the first successful handover report includes one of the following:
related information of the primary secondary cell;
related information of a primary cell accessed by the terminal and related information of a primary secondary cell;
related information of a primary cell accessed by the terminal.

In another embodiment of the present disclosure, the related information of the primary secondary cell includes one or more of the following:
report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of the terminal accessing the first primary secondary cell;
trigger node information in case of SN addition;
trigger node information during change of the primary secondary cell.

In another embodiment of the present disclosure, determining, by the second MN according to the trigger reason of the first successful handover report, the second target network node that needs to perform optimization includes one of the following:
if the trigger reason of the first successful handover report is that timing time of a first timer is greater than a threshold of the first timer, determining that the second target network node includes one or more of the following: a trigger node for the addition of the SN or the change of the primary secondary cell, a target SN accessed by the terminal;
if the trigger reason of the first successful handover report is that timing time of a second timer is greater than a threshold of the second timer, determining that the second target network node includes one or more of the following: a trigger node for the addition of the SN or the change of the primary secondary cell, a source SN accessed by the terminal before the change of the primary secondary cell, and a third MN accessed by the terminal when triggering the addition of the SN or the change of the primary secondary cell;
if the trigger reason of the first successful handover report is that timing time of a third timer is greater than a threshold of the third timer, determining that the second target network node is a node triggering the addition of the SN or the change of the primary secondary cell.

In another embodiment of the present disclosure, receiving the first successful handover report sent by the terminal includes:
sending a terminal information acquisition request message to the terminal;
receiving a response message sent by the terminal, wherein the response message includes the first successful handover report.

In another embodiment of the present disclosure, before sending the terminal information acquisition request message to the terminal, the method further includes:
receiving first information sent by a terminal; or receiving second information sent by an SN node, wherein the second information is sent after the SN node receives the first information sent by the terminal, and the second information includes index information of the terminal; and the first information and/or the second information indicate that the terminal has generated the first successful handover report.

In another embodiment of the present disclosure, the first information is carried by one or more of following messages:
a radio resource control (RRC) connection establishment complete message;
an RRC connection re-establishment complete message;
an RRC connection reconfiguration complete message;
an RRC connection resume complete message..

In another embodiment of the present disclosure, the sending the first successful handover report to the second target network node includes:
reusing a transmission message of a first interface and/or a second interface to send the first successful handover report to the second target network node;
wherein the first interface is a network interface between radio access network nodes, and the second interface is a network interface between a radio access network node and a core network node.

In another embodiment of the present disclosure, the first successful handover report includes one or more of the following information:
a candidate primary secondary cell list;
an execution condition corresponding to triggering the terminal to access a candidate primary secondary cell;
time length information between first time and second time, the first time being time when the conditional synchronization reconfiguration message is received for last time before the execution condition is met, and the second time being time when determining that the execution condition is met.

In another embodiment of the present disclosure, the first successful handover report includes: association information related to the first successful handover report; identification information, wherein the identification information is used to indicate that the addition of the SN or the change of the primary secondary cell is implemented through a conditional synchronization reconfiguration.

In another embodiment of the present disclosure, the method further includes: searching, according to the association information, a candidate primary secondary cell list corresponding to the first successful handover report and/or an execution condition corresponding to triggering the terminal to access a candidate primary secondary cell; sending, to the second target network node, the candidate primary secondary cell list and/or the execution condition corresponding to triggering the terminal to access the candidate primary secondary cell.

In another embodiment of the present disclosure, the method further includes: sending a conditional synchronization reconfiguration message to the terminal, wherein the conditional synchronization reconfiguration message includes the candidate primary secondary cell list and the execution condition corresponding to triggering the terminal to access the candidate primary secondary cell.

In another embodiment of the present disclosure, the sending the first successful handover report to the second target network node includes: sending an un-decoded first successful handover report to the second target network node; or decoding the first successful handover report; and sending the decoded first successful handover report to the second target network node.

In another embodiment of the present disclosure, the method further includes: receiving some or all of information of the decoded first successful handover report sent by the second target network node.

A method for processing a successful handover report is provided. The method includes: receiving, by a secondary node SN, a first successful handover report sent by a second MN; performing network optimization according to the first successful handover report; wherein the first successful handover report is generated in case of addition of a SN accessed by a terminal or change of a primary secondary cell and when a first trigger condition is met, the second MN is an MN accessed by the terminal when the terminal generates the first successfully handover report.

In another embodiment of the present disclosure, before receiving the first successful handover report sent by the second MN, the method further includes: receiving first information sent by the terminal; sending second information to the second MN according to the first information, wherein the second information includes index information of the terminal; wherein the first information and/or the second information indicate that the terminal has generated the first successful handover report.

In another embodiment of the present disclosure, the first successful handover report includes one of the following: related information of the primary secondary cell; related information of a primary cell accessed by the terminal and related information of the primary secondary cell accessed by the terminal.

In another embodiment of the present disclosure, the first information is carried by one or more of following messages: a radio resource control (RRC) connection establishment complete message; an RRC connection re-establishment complete message; an RRC connection reconfiguration complete message; an RRC connection resume complete message.

In another embodiment of the present disclosure, the second information is a first interface message; the first interface is a network interface between radio access network nodes.

In another embodiment of the present disclosure, after receiving the first successful handover report sent by the MN, the method includes: decoding the first successful handover report.

In another embodiment of the present disclosure, the method further includes: sending, to the second MN, some or all of information of the decoded first successful handover report.

In another embodiment of the present disclosure, the method further includes: receiving, from the second MN, a candidate primary secondary cell list and an execution condition corresponding to triggering the terminal to access a candidate primary secondary cell.

A device for processing a successful handover report, the device is applied to a terminal. The device includes a memory, a transceiver, and a processor, wherein the memory is configured to store a computer program, the transceiver is configured to receive and send data under the control of the processor; and the processor is configured to read the computer program in the memory and perform the following operations:
obtaining configuration information of a first trigger condition for generating a successful handover report of a primary secondary cell; in case of addition of a secondary node SN accessed by a terminal or change of the primary secondary cell, generating a first successful handover report, according to the configuration information, when determining that the first trigger condition is met; wherein the transceiver is configured to send the first successful handover report to a first master node MN accessed by the terminal.

In another embodiment of the present disclosure, the first trigger condition includes: that a current value of a timer is greater than a threshold of the timer when the terminal successfully accesses a first primary secondary cell.

In another embodiment of the present disclosure, the first successful handover report includes one of the following: related information of the primary secondary cell; related information of a primary cell accessed by the terminal and related information of the primary secondary cell accessed by the terminal; related information of a primary cell accessed by the terminal.

In another embodiment of the present disclosure, the related information of the primary secondary cell includes one or more of the following:
a report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of accessing a first primary secondary cell by the terminal;
trigger node information in case of SN addition;
trigger node information during change of the primary secondary cell.

In another embodiment of the present disclosure, the processor is configured to read the computer program in the memory and perform the following operations: when determining that the first trigger condition is met and when a second trigger condition of a successful handover report of the primary cell is met, recording related information of the primary cell; generating the first successful handover report according to the related information of the primary cell.

In another embodiment of the present disclosure, the processor is configured to read the computer program in the memory and perform one of the following operations:
if time of determining that the second trigger condition is met is earlier than time of determining that the first trigger condition is met, then recording the related information of the primary cell; if time of determining that the first trigger condition is met is earlier than time of determining that the second trigger condition is met, then recording the related information of the primary secondary cell when the first trigger condition is met, and when the second trigger condition is met, recording the related information of the primary cell and deleting the related information of the primary secondary cell.

In another embodiment of the present disclosure, the transceiver is further configured to: send first information to a first target network node, wherein the first information indicates that the terminal has generated the first successful handover report; receive a terminal information obtaining request message sent by the first MN; send a response message to the first MN, wherein the response message includes the first successful handover report.

In another embodiment of the present disclosure, the first information is carried by one or more of following messages: a radio resource control (RRC) connection establishment complete message; an RRC connection re-establishment complete message; an RRC connection reconfiguration complete message; an RRC connection resume complete message.

In another embodiment of the present disclosure, the transceiver is specifically configured to perform one of the following:
send the first information to the first MN;
if the change of the primary secondary cell is change of the primary secondary cell in the SN triggered by the SN, sending the first information to the SN;
if the change of the primary secondary cell is change of the primary secondary cell in the MN triggered by the MN, sending the first information to the first MN.

In another embodiment of the present disclosure, the first information is sent after the terminal successfully accesses a first primary secondary cell and generates the first successful handover report.

In another embodiment of the present disclosure, the processor is configured to read the computer program in the memory and perform the following operations:
encoding the first successful handover report according to an access technology of accessing a first MN by the terminal; or encoding the first successful handover report according to an access technology of accessing a target SN by the terminal; wherein the access technology of the first MN is same as or different from the access technology of the target SN.

In another embodiment of the present disclosure, the transceiver is further configured to:
receive a conditional synchronization reconfiguration message, wherein the conditional synchronization reconfiguration message includes a candidate primary secondary cell list and an execution condition corresponding to triggering the terminal to access a candidate primary secondary cell;
the processor is configured to read the computer program in the memory and perform the following operations:
   performing the addition of the SN or the change of the primary secondary cell in a case that the execution condition is met.

In another embodiment of the present disclosure, the first successful handover report includes one or more of the following information:
the candidate primary secondary cell list;
the execution condition corresponding to triggering the terminal to access the candidate primary secondary cell;
time length information between first time and second time, the first time being time when the conditional synchronization reconfiguration message is received for last time before the execution condition is met, and the second time being time when determining that the execution condition is met.

In another embodiment of the present disclosure, the first successful handover report includes: association information related to the first successful handover report; identification information, wherein the identification information is used to indicate that the addition of the SN or the change of the primary secondary cell is implemented through a conditional synchronization reconfiguration.

A device for processing a successful handover report is provided. The device is applied to a second MN, the device includes a memory, a transceiver, and a processor, wherein the memory is configured to store a computer program; the transceiver is configured to receive and send data under the control of the processor; and the processor is configured to read the computer program in the memory and perform the following operations:
obtaining a first successful handover report, wherein the first successful handover report is generated by a terminal in case of addition of a SN accessed by the terminal or change of a primary secondary cell and when a first trigger condition is met;
determining, according to a trigger reason of the first successful handover report, a second target network node that needs to perform optimization;
wherein the transceiver is configured to send the first successful handover report to the second target network node.

In another embodiment of the present disclosure, the transceiver is further configured to perform one of the following:
receiving the first successful handover report sent by the terminal;
receiving the first successful handover report sent by the first MN, wherein the first MN is an MN accessed by the terminal when the terminal reports the first successful handover report.

In another embodiment of the present disclosure, the first successful handover report includes one of the following:
related information of the primary secondary cell;
related information of a primary cell accessed by the terminal and related information of a primary secondary cell;
related information of a primary cell accessed by the terminal.

In another embodiment of the present disclosure, the related information of the primary secondary cell includes one or more of the following:
report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of the terminal accessing the first primary secondary cell;
trigger node information in case of SN addition;
trigger node information during change of the primary secondary cell.

In another embodiment of the present disclosure, the processor is configured to read the computer program in the memory and perform one of the following:
if the trigger reason of the first successful handover report is that timing time of a first timer is greater than a threshold of the first timer, determining that the second target network node includes one or more of the following: a trigger node for the addition of the SN or the change of the primary secondary cell, a target SN accessed by the terminal;
if the trigger reason of the first successful handover report is that timing time of a second timer is greater than a threshold of the second timer, determining that the second target network node includes one or more of the following: a trigger node for the addition of the SN or the change of the primary secondary cell, a source SN accessed by the terminal before the change of the primary secondary cell, and a third MN accessed by the terminal when triggering the addition of the SN or the change of the primary secondary cell;
if the trigger reason of the first successful handover report is that timing time of a third timer is greater than a threshold of the third timer, determining that the second target network node is a node triggering the addition of the SN or the change of the primary secondary cell.

In another embodiment of the present disclosure, the transceiver is configured for: sending a terminal information acquisition request message to the terminal; receiving a response message sent by the terminal, wherein the response message includes the first successful handover report.

In another embodiment of the present disclosure, the transceiver is further configured for: receiving first information sent by a terminal; or receiving second information sent by an SN node, wherein the second information is sent after the SN node receives the first information sent by the terminal, and the second information includes index information of the terminal; and the first information and/or the second information indicate that the terminal has generated the first successful handover report.

In another embodiment of the present disclosure, the first information is carried by one or more of following messages:
a radio resource control (RRC) connection establishment complete message;
an RRC connection re-establishment complete message;
an RRC connection reconfiguration complete message;
an RRC connection resume complete message..

In another embodiment of the present disclosure, the transceiver is further configured for: reusing a transmission message of a first interface and/or a second interface to send the first successful handover report to the second target network node; wherein the first interface is a network interface between radio access network nodes, and the second interface is a network interface between a radio access network node and a core network node.

In another embodiment of the present disclosure, the first successful handover report includes one or more of the following information:
a candidate primary secondary cell list;
an execution condition corresponding to triggering the terminal to access a candidate primary secondary cell;
time length information between first time and second time, the first time being time when the conditional synchronization reconfiguration message is received for last time before the execution condition is met, and the second time being time when determining that the execution condition is met.

In another embodiment of the present disclosure, the first successful handover report includes: association information related to the first successful handover report; identification information, wherein the identification information is used to indicate that the addition of the SN or the change of the primary secondary cell is implemented through a conditional synchronization reconfiguration.

In another embodiment of the present disclosure, the processor is configured to read the computer program in the memory and perform following: searching, according to the association information, a candidate primary secondary cell list corresponding to the first successful handover report and/or an execution condition corresponding to triggering the terminal to access a candidate primary secondary cell; the transceiver is further configured for sending, to the second target network node, the candidate primary secondary cell list and/or the execution condition corresponding to triggering the terminal to access the candidate primary secondary cell.

In another embodiment of the present disclosure, the transceiver is further configured for: sending a conditional synchronization reconfiguration message to the terminal, wherein the conditional synchronization reconfiguration message includes the candidate primary secondary cell list and the execution condition corresponding to triggering the terminal to access the candidate primary secondary cell.

In another embodiment of the present disclosure, the transceiver is further configured for: sending an un-decoded first successful handover report to the second target network node; or the processor is configured for decoding the first successful handover report; and sending the decoded first successful handover report to the second target network node.

In another embodiment of the present disclosure, the transceiver is further configured for: receiving some or all of information of the decoded first successful handover report sent by the second target network node.

A device for processing a successful handover report is provided. The device is applied to SN. The device includes a memory, a transceiver, and a processor, wherein the memory is configured to store a computer program; the transceiver is configured to receive and send data under the control of the processor; and the processor is configured to read the computer program in the memory and perform the following operations:
receiving a first successful handover report sent by a second MN;
performing network optimization according to the first successful handover report;
wherein the first successful handover report is generated in case of addition of a SN accessed by a terminal or change of a primary secondary cell and when a first trigger condition is met, wherein the second MN is an MN accessed by the terminal when the terminal generates the first successfully handover report.

In another embodiment of the present disclosure, the transceiver is further configured for: receiving first information sent by the terminal; sending second information to the second MN according to the first information, wherein the second information includes index information of the terminal; wherein the first information and/or the second information indicate that the terminal has generated the first successful handover report.

In another embodiment of the present disclosure, the first successful handover report includes one of the following: related information of the primary secondary cell; related information of a primary cell accessed by the terminal and related information of the primary secondary cell accessed by the terminal.

In another embodiment of the present disclosure, the first information is carried by one or more of following messages: a radio resource control (RRC) connection establishment complete message; an RRC connection re-establishment complete message; an RRC connection reconfiguration complete message; an RRC connection resume complete message.

In another embodiment of the present disclosure, the second information is a first interface message; the first interface is a network interface between radio access network nodes.

In another embodiment of the present disclosure, the processor is configured to read the computer program in the memory and perform following: decoding the first successful handover report.

In another embodiment of the present disclosure, the transceiver is further configured for: sending, to the second MN, some or all of information of the decoded first successful handover report.

In another embodiment of the present disclosure, the transceiver is further configured for: receiving, from the second MN, a candidate primary secondary cell list and an execution condition corresponding to triggering the terminal to access a candidate primary secondary cell.

A device for processing a successful handover report is provided. The device is applied to a terminal. The device includes:a first obtaining unit, configured to obtain configuration information of a first trigger condition for generating a successful handover report of a primary secondary cell; a first processing unit, configured to in case of addition of a secondary node SN accessed by a terminal or change of the primary secondary cell, generate a first successful handover report, according to the configuration information, when determining that the first trigger condition is met; and a first sending unit, configured to send the first successful handover report to a first master node MN accessed by the terminal.

A device for processing a successful handover report is provided. The device is applied to a second MN. The device includes:
a second obtaining unit, configured to obtain a first successful handover report, wherein the first successful handover report is generated by a terminal in case of addition of a SN accessed by the terminal or change of a primary secondary cell and when a first trigger condition is met;
a first determining unit, configured to determine, according to a trigger reason of the first successful handover report, a second target network node that needs to perform optimization; and
a second sending unit, configured to send the first successful handover report to the second target network node, wherein the second MN is an MN accessed by the terminal when the terminal generates the first successful access report.

A device for processing a successful handover report is provided. The device is applied to an SN. The device includes: a first receiving unit, configured to receive a first successful handover report sent by a second MN; a second processing unit, configured to perform network optimization according to the first successful handover report; wherein the first successful handover report is generated in case of addition of a SN accessed by a terminal or change of a primary secondary cell and when a first trigger condition is met, the second MN is an MN accessed by the terminal when the terminal generates the first successful handover report.

A processor-readable storage medium having a computer program stored thereon is provided, wherein the computer program, when executed by a processor, implements the steps of the methods for processing a successful handover report described above.

The above technical solution of the present disclosure has the following beneficial effects:

In the embodiments of the present disclosure, a successful handover report related to the primary secondary cell is generated in the case of SN addition or change of the primary secondary cell in the MR-DC scenario, so as to record and analyze the problem of adding the SN or changing the primary secondary cell, so that the network side can optimize the network node according to the successful handover report.

### BRIEF DESCRIPTION OF THE DRAWINGS

FIG. 1 is a schematic diagram of an architecture of dual connectivity according to an embodiment of the present disclosure;
FIG. 2 is a first schematic flowchart of a method for processing a successful handover report according to an embodiment of the present disclosure;
FIG. 3 is a second schematic flowchart of a method for processing a successful handover report according to an embodiment of the present disclosure;
FIG. 4 is a third flowchart of a method for processing a successful handover report according to an embodiment of the present disclosure;
FIG. 5 is a first schematic flowchart of a device for processing a successful handover report according to an embodiment of the present disclosure;
FIG. 6 is a second schematic flowchart of a device for processing a successful handover report according to an embodiment of the present disclosure;
FIG. 7 is a third schematic flowchart of a device for processing a successful handover report according to an embodiment of the present disclosure;
FIG. 8 is a fourth schematic flowchart of a device for processing a successful handover report according to an embodiment of the present disclosure;
FIG. 9 is a fifth schematic flowchart of a device for processing a successful handover report according to an embodiment of the present disclosure;
FIG. 10 is a sixth flowchart of a device for processing a successful handover report according to an embodiment of the present disclosure.

### DETAILED DESCRIPTION

In order to make the technical problems, technical solutions and advantages to be solved by the present disclosure clearer, the following describes in detail with reference to the accompanying drawings and specific embodiments. In the following description, specific details such as specific configurations and components are provided merely to facilitate a thorough understanding of embodiments of the present disclosure. Therefore, those skilled in the art should understand that various changes and modifications can be made to the embodiments described herein without departing from the scope and spirit of the present disclosure. In addition, descriptions of known functions and constructions are omitted for clarity and conciseness.

It should be understood that "one embodiment" or "an embodiment" mentioned throughout the specification means that a particular feature, structure, or characteristic related to the embodiment is included in at least one embodiment of the present disclosure. Therefore, "in one embodiment" or "in an embodiment" appearing throughout the specification does not necessarily refer to the same embodiment. Furthermore, the particular features, structures, or characteristics may be combined in any suitable manner in one or more embodiments.

In various embodiments of the present disclosure, it should be understood that the size of the sequence number of each process below does not mean the order of execution. The execution order of each process should be determined by its function and internal logic, and should not constitute any limitation on the implementation process of the embodiment of the present disclosure.

In the embodiment of the present disclosure, the term "and/or" describes the association relationship of the associated objects, indicating that there can be three relationships. For example, A and/or B can represent: A exists alone, A and B exist at the same time, and B exists alone. The character "/" generally indicates that the objects associated with each other are in an "or" relationship.

In the embodiment of the present disclosure, the term "multiple" refers to two or more, and other quantifiers are similar.

The technical solutons in the embodiment of the present disclosure will be clearly and completely described below in conjunction with the drawings in the embodiment of the present disclosure. Obviously, the described embodiments are only part of the embodiments of the present disclosure, not all of the embodiments. Based on the embodiments in the present disclosure, all other embodiments obtained by ordinary technicians in the field without creative work are within the scope of protection of the present disclosure. When performing the description of the embodiments of the present disclosure, some concepts used in the following description are first explained.
1. Multi Connectivity (MC).

In a multi-connectivity architecture, a UE may be connected to one MN, and to a plurality of SNs, and perform signaling and/or data interaction with the network nodes. Both the MN node and the SN node may be LTE/e-LTE/NR nodes. When there is one MN node and one SN node, it may be referred to as a dual connection (DC).

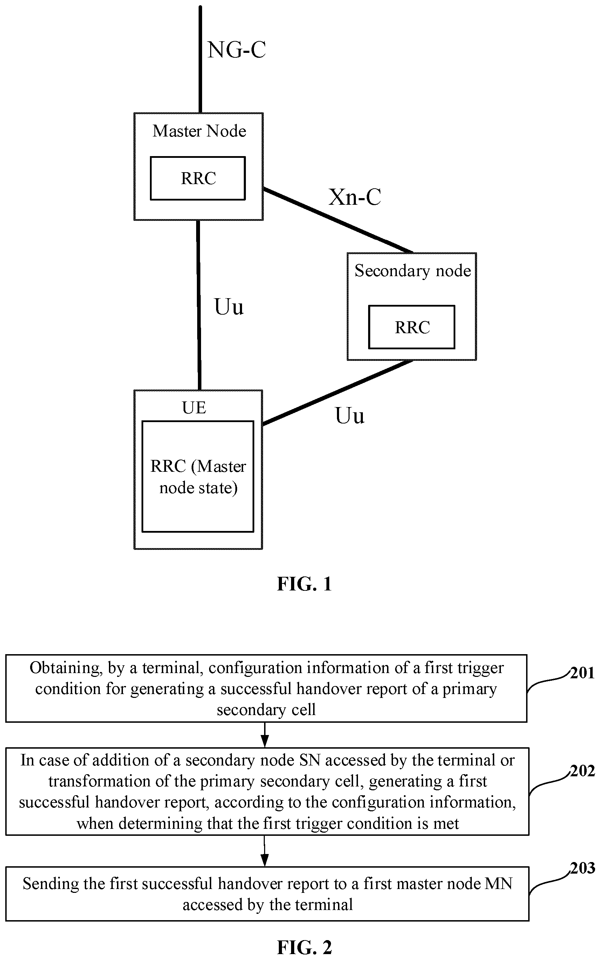

When the UE is in a connected state, the UE may be connected to one or more network side nodes, and the network side nodes may be in one or more radio access technologies (RATs). For example, when the MN is a Long Term Evolution (LTE) node and an SN is an NR node, it is an (NG) EN-DC dual connectivity; when the MN is an NR node and the SN is an LTE node, it is an NE-DC dual connectivity; and when the MN and the SN are both NR nodes, it is NR-NR-DC, and the dual connectivity architecture is shown in FIG. 1.

The Secondary Cell Group (SCG) is the serving cell group under the SN node in the MR-DC, and includes one PSCell and includes one or more secondary cells (Scells) that may exist possibly.

Second, SN Change (SN Change).

The SN change process may be triggered by the MN or the SN, the context of the UE is transferred from the source SN to the target SN, and change of the SCG configuration from the source SN to the target SN is performed on the UE side.

Embodiments of the present disclosure provide a method and apparatus for processing a successful handover report, to resolve a problem that a terminal and a network side device cannot record and analyze a problem of adding an SN or a PSCell change in an MR-DC scenario.

The method and the device are based on the same application concept, and because the method and the device solve a similar principle of a problem, the implementation of the device and the method may refer to each other, and details are not described herein again.

As shown in FIG. 2, an embodiment of the present disclosure provides a method for processing a successful handover report, which is applied to a terminal, and specifically includes the following steps:
Step 201: obtaining, by a terminal, configuration information of a first trigger condition for generating a successful handover report of a primary secondary cell.

The configuration information may include a threshold used to determine whether a timer of the first trigger condition is met.

Step 202: in case of addition of a secondary node SN accessed by the terminal or change of the primary secondary cell, generating a first successful handover report, according to the configuration information, when determining that the first trigger condition is met.

The successful handover report of the primary secondary cell is a successful handover report containing related information of the primary secondary cell. The first successful handover report may be a successful handover report of the primary secondary cell, or may be another successful handover report, that is, when the first trigger condition is met, the generated handover report may include related information of the primary secondary cell, or may not include related information of the primary secondary cell.

Step 203: sending the first successful handover report to a first master node MN accessed by the terminal.

In this embodiment, in case of addition of a secondary node SN accessed by the terminal or change of the primary secondary cell (PSCell), the first successful handover report may be generated when the first trigger condition is met according to the trigger condition of the successful handover report of the primary secondary cell, where the primary secondary cell may be changed when the SN accessed by the terminal is added. The first successful handover report may be a successful handover report of the primary secondary cell, or may be another successful handover report, for example, a successful handover report of the primary cell. The first MN is an MN accessed when the terminal reports the first successful handover report. The terminal reports the first successful handover report to the currently accessed first MN, so that the first MN forwards the first successful handover report to other network nodes that need to be optimized. It should be noted that the first MN is an MN accessed when the terminal needs to report the first successful handover report, and may be the same as or different from an MN accessed when the terminal generates the first successful handover report.

In the embodiments of the present disclosure, a successful handover report related to the primary secondary cell is generated in the case of SN addition or change of the primary secondary cell in the MR-DC scenario, so as to record and analyze the problem of adding the SN or changing the primary secondary cell, so that the network side can optimize the network node according to the successful handover report.

In another embodiment of the present disclosure, the first trigger condition includes: that a current value of a timer is greater than a threshold of the timer when the terminal successfully accesses a first primary secondary cell.

In this embodiment, the first primary secondary cell is a target primary secondary cell that needs to be accessed after the terminal performs SN addition or change of the primary secondary cell. The terminal performs addition of a secondary node SN or a change of the primary secondary cell, and if the current timing time of the timer is greater than the threshold of the timer at the time instant of successfully access the first primary secondary cell, then the first trigger condition is met and the first successful handover report is generated. The timer may include one or more of the following:
1) a first timer, for example, a T304 timer or another newly added timer, a threshold value of the first timer may be configured in the configuration information of the first trigger condition, and is configured to determine whether the random access duration in the process of accessing the first primary secondary cell by the terminal expires when the SN accessed by the terminal is added or the primary secondary cell is changed. Taking the first timer being the T304 timer as an example, the threshold of the T304 timer may be assigned by a target PSCell to be accessed by the terminal, and is configured to determine whether the random access duration in the process of accessing target PSCell exceeds the threshold of the T304 timer. For a scenario in which the SN node is newly added, the threshold value of the T304 timer may be assigned by a target cell of the newly added SN node; for a PSCell change scenario, for example, the PSCell A is changed to the PSCell B, the threshold value of the T304 timer is assigned by the PSCell B.
2) a second timer, for example, a T310 timer or another newly added timer, a threshold value of the second timer may be configured in the configuration information of the first trigger condition, and is configured to determine whether a critical radio link failure occurs in the second primary secondary cell accessed by the terminal when the SN accessed by the terminal is added or the primary secondary cell is changed. Taking the first timer being the T310 timer as an example, the threshold value of the T310 timer may be allocated by the currently accessed PSCell and is used for determining whether a critical radio link failure occurs in the source PSCell.
3) a third timer, for example, a T312 timer or another newly added timer, a threshold of the third timer is configured in the configuration information of the first trigger condition, and is configured to determine whether the SN addition or the change of the primary secondary cell meets a trigger time requirement, that is, whether the SN addition or the change of the primary secondary cell is triggered in time. Taking the first timer being the T312 timer as an example, the threshold value of the T312 timer is used to determine whether the SN addition or PSCell change is triggered in time. Both MN and SN may configure the threshold of the T312 timer. For example, when the MN node triggers the SN addition or the change of the primary secondary cell, if the threshold value of the T312 timer is exceeded, it indicates that the duration of triggering by the MN is long, and the MN needs to perform optimization; and when the source SN node triggers the change of the primary secondary cell, if the threshold value of the T312 timer is exceeded, it indicates that the duration of triggering by the source SN is long, and the source SN needs to perform optimization.

In this embodiment, when the configuration information of the first trigger condition is configured, the configuration information may be sent to the UE through an RRC connection reconfiguration message, and a signaling radio bearer (SRB) 1 or an SRB 3 is used

In a process of SN addition or PSCell change, if the threshold of the T304 timer of the PSCell is configured, then when the current value of the T304 timer is greater than the threshold of the T304 timer at the time instant of successfully accessing the first primary secondary cell by the terminal, the first successful handover report is triggered to be generated. If the threshold of the T310 timer of the PSCell is configured, then before the process of PSCell change, when the current value of T310 of the PSCell is greater than the threshold of the T310 timer of the PSCell, the first successful handover report is triggered to be generated. If the threshold of the T312 timer corresponding to the target PSCell measurement is configured, then before the process of PSCell change, when the current value of T312 corresponding to the measurement is greater than the threshold of the T312 timer, the first successful handover report is triggered to be generated.

In this embodiment, the first primary secondary cell is a target primary secondary cell that needs to be accessed when the terminal performs SN addition or change of the primary secondary cell.

In an optional embodiment, the first successful handover report includes one of the following A to C.
A: related information of a primary secondary cell.

In this embodiment, the first successful handover report may be a successful handover report of the primary secondary cell, and the successful handover report of the primary secondary cell includes related information of the primary secondary cell. When the terminal meets the first trigger condition, the first successful handover report is generated, where the first successful handover report includes related information of the primary secondary cell. In this case, the generated first successful handover report (which may be the successful handover report of the primary secondary cell) and the successful handover report of the primary cell generated when the terminal performs the traditional PCell handover are two independent successful handover reports.

If the terminal satisfies the first trigger condition and the second trigger condition for generating the successful handover report of the primary cell at the same time, then on the basis that the successful handover report of the PCell, another successful handover report of the PSCell is newly added, that is, the first successful handover report (which may be the successful handover report of the primary secondary cell) and the successful handover report of the primary cell are respectively generated, the first successful handover report includes the related information of the primary secondary cell, and the successful handover report of the primary cell includes the related information of the primary cell.

In an optional embodiment, the related information of the primary secondary cell includes one or more of the following:
1) report trigger reason, i.e., the trigger reason of the successful handover report of the primary secondary cell may include one or more reasons such as a first timer, a second timer, and a third timer;
2) the cell identifier of the second primary secondary cell accessed by the terminal; it should be noted that, if the successful handover report of the PSCell is triggered, the UE has a PSCell, and this item exists; the cell identifier is a global cell identifier of the UE; the second primary secondary cell is a source primary secondary cell that the terminal accesses before performing SN addition or change of the primary secondary cell;
3) a measurement result of a second primary secondary cell accessed by the terminal;
   it should be noted that, if the successful handover report of the PSCell is triggered, the UE has a PSCell, and this item exists; the measurement result is: measurements of reference signal received powers (Reference Signal Received Power, RSRP) and/or reference signal received qualities (Reference Signal Received Quality, RSRQ) and/or signal-to-noise and interference ratio (Signal-to-Noise and Interference Ratio, SINR) of a cell and various beams when the UE successfully accesses randomly a target PSCell in case of SN addition or PSCell change;
4) a cell identifier of a first primary secondary cell accessed by the terminal;
   the first primary secondary cell is a target primary secondary cell in case of an SN addition or a PSCell change, and the cell identifier is a global cell identifier of the UE;
5) a measurement result of the first primary secondary cell accessed by the terminal;
   the first primary secondary cell is a target primary secondary cell in case of SN addition or PSCell change; when the measurement result is the measurement results of RSRP and/or RSRQ and/or SINR of the target cell and various beam when the UE successfully randomly accesses the target PSCell in case of SN addition or PSCell change;
6) a measurement result of a neighboring cell of a first primary secondary cell accessed by the terminal;
   the first primary secondary cell is a target primary secondary cell in case of SN addition or PSCell change; a measurement result of each measurement object currently configured by the UE is recorded, where the measurement result is measurement result of RSRPs and/or RSRQs and/or SINRs of the neighbor cells and various beams when the UE successfully accesses the target PSCell in case of SN addition or PSCell change;
7) random access information of the first primary secondary cell accessed by the terminal;
   the target primary secondary cell is a target primary secondary cell in case of an SN addition or a PSCell change; the random access information of the target PSCell is recorded when the trigger reason of the successful handover report of the primary secondary cell is the first timer in case of SN addition of PSCell change;
8) trigger node information in case of SN addition; in case of SN node additions, the trigger node information is the PCell-related information of the MN; in another embodiment provided in the present disclosure, a global cell identifier, or a physical cell identifier (PCI) and frequency point information of the cell may be recorded;
9) trigger node Information in case of change of the primary secondary cell; when the PSCell is changed, the trigger node information may be PCell-related information of the MN node or PSCell-related information of the source SN node; in another embodiment provided in the present disclosure, the global cell identifier, or PCI and frequency point information of the cell may be recorded.

B: related information of a primary cell accessed by the terminal and related information of a primary secondary cell accessed by the terminal.

In this case, the first successful handover report is a report that may include the related information of the primary cell and the related information of the primary secondary cell at the same time. If the terminal satisfies the first trigger condition and the second trigger condition for generating the successful handover report of the primary cell at the same time, only one first successful handover report is generated which includes related information of the primary cell and related information of the primary secondary cell.

In another embodiment of the present disclosure, in this case, if the terminal only meets the first trigger condition, the generated first successful handover report only includes the related information of the primary secondary cell; and if the terminal only meets the second trigger condition, the generated first successful handover report only includes the related information of the primary cell.

For example, when the terminal simultaneously satisfies the first trigger condition and the second trigger condition for generating the successful handover report of the primary cell, the first successful handover report includes related information of the primary secondary cell and related information of the primary cell, and specifically, the first successful handover report includes one or more of the following:
1) a first timer of the PSCell, a second timer of the PSCell, and a third timer of the PSCell are newly added on the basis of the reason of a successful handover report of the original PCell (for example, the T304 timer, the T310 timer, the T312 timer, and the dual active protocol stack (DAPS) handover sources fail). The trigger reason may be one or more of the reasons described above;
2) a cell identifier of a source PSCell and a cell identifier of a target PSCell; if the first successful handover report is triggered, the UE has a PSCell and records the cell identifier of the source PSCell, the target PSCell cell is a target cell in case of SN addition or PSCell change; the cell identifier is a global cell identifier or PCI and frequency point information of the UE;
3) when the trigger reason of the first successful handover report is the T304 timer, the random access information of the target PSCell is recorded;
4) trigger node information of SN addition or PSCell change; in case of the SN node addition, the trigger node information is a PCell of the MN node; and in case of the PSCell change, the trigger node may be a PCell of the MN node or a PSCell of the source SN node; and the global cell identifiers of the cells, or PCI and frequency point information is recorded.

C: related information of a primary cell accessed by the terminal.

In another embodiment provided in the present disclosure, in this case, the first successful handover report may be a successful handover report of the primary cell, and in a case where it is determined that the first trigger condition is met, generating the first successful handover report includes: in a case that it is determined that the first trigger condition is met and a second trigger condition of a successful handover report of the primary cell is met, recording related information of the primary cell; and generating the first successful handover report according to the related information of the primary cell (which may be the successful handover report of the primary cell).

In this embodiment, since the PCell handover failure will cause abnormal release (i.e. dropped call) in the communication process, the user experience is the worst; while the PSCell fails and the service rate is reduced, the relative impact is relatively small; therefore, when the terminal satisfies the first trigger condition and the second trigger condition at the same time, the priority of solving the problem of the primary cell is highest, and only the first successful handover report (which may be the successful handover report of the primary cell) containing the related information of the primary cell is generated.

In an optional embodiment, in a case that it is determined that the first trigger condition is met and a second trigger condition of a successful handover report of the primary cell is met, recording related information of the primary cell includes one of the following:
if time of determining that the second trigger condition is met is earlier than time of determining that the first trigger condition is met, then recording the related information of the primary cell; and
if time of determining that the first trigger condition is met is earlier than time of determining that the second trigger condition is met, then recording the related information of the primary secondary cell when the first trigger condition is met, and when the second trigger condition is met, recording the related information of the primary cell and deleting the related information of the primary secondary cell.

In this embodiment, the successful handover report of the primary cell is a successful handover report containing related information of the primary cell, for example, the successful handover report of the primary cell is generated when the terminal performs primary cell handover and the second trigger condition is met. It should be noted that the information included in the related information of the primary cell is similar to the related information of the primary secondary cell, and details are not described herein again.

When the successful handover report of the primary cell is triggered first (that is, the second trigger condition is met first), then the successful handover report of the primary secondary cell is triggered (that is, the first trigger condition is met), and only the related information of the primary cell is generated and recorded (for example, only the successful handover report of the primary cell is generated). When the successful handover report of the primary secondary cell is triggered first (that is, the first trigger condition is first met), and the related information of the primary secondary cell is recorded (for example, the successful handover report of the PSCell is generated), then the successful handover report of the primary cell is triggered (i.e. the second trigger condition is met), then the related information of the primary secondary cell recorded previously is deleted (or the generated successful handover report of the primary secondary cell is deleted), and the related information of the primary cell is generated and recorded (or the successful handover report of the primary cell is generated).

In an optional embodiment, after generating the first successful handover report, the method further includes: sending first information to a first target network node, wherein the first information indicates that the terminal has generated the first successful handover report;
the sending the first successful handover report to the first master node MN accessed by the terminal includes: receiving a terminal information obtaining request message sent by a first MN; sending a response message to the first MN, wherein the response message includes the first successful handover report.

In this embodiment, after the terminal generates the first successful handover report, the terminal sends the first information to the first target network node to notify the network side that the first successful handover report has been generated. After receiving the first information, the first target network node may send an information obtaining request to the first MN to obtain the first successful handover report.

In another embodiment of the present disclosure, the first information is carried by one or more following messages: an RRC connection establishment completion message; an RRC connection re-establishment completion message; an RRC connection reconfiguration completion message; and an RRC connection recovery completion message.

In another embodiment provided in the present disclosure, the first information may further be carried by another message other than the foregoing message.

In this embodiment, the indication information may be added to any one or more of the RRC connection establishment completion message, the RRC connection reestablishment completion message, the RRC connection reconfiguration complete message, and the RRC connection resume complete message, and it is indicated that the UE records the first successful handover report. In another embodiment provided in the present disclosure, the first information may indicate that the UE simultaneously records the successful handover report of the primary cell and the successful handover report of the primary secondary cell, or indicates that the UE records the successful handover report of the primary cell, or indicates that the UE records the successful handover report of the primary secondary cell.

The first MN, through triggering a request message process of obtaining UE Information, obtains a successful handover report of the primary cell and a successful handover report of the primary secondary cell recorded by the UE, or obtains a successful handover report of the primary cell recorded by the UE, or obtains a successful handover report of the primary secondary cell recorded by the UE. In another embodiment provided in the present disclosure, the first successful handover report may be added to a response message (UE Information Response) sent by the terminal.

In another embodiment of the present disclosure, the first information is sent after the terminal successfully accesses the first primary secondary cell and generates the first successful handover report.

In this embodiment, the first primary secondary cell is a target primary secondary cell in case of an SN addition or a PSCell change. After recording the first successful handover report, the terminal sends first information to the first MN currently accessed by the terminal, and notifies the network side to obtain the first successful handover report. For example, after successfully accessing the first primary secondary cell and generating the first successful handover report, the terminal may actively trigger an RRC connection reconfiguration complete message or another newly added message, where the message carries first information used to instruct the UE to record the first successful handover report.

In an optional embodiment, the sending first information to a first target network node includes one of the following manners 1-3.

Manner 1: sending the first information to the first MN.

In this embodiment, the first target network node is a first MN accessed when the terminal reports the first successful handover report, that is, the terminal notifies the first MN to obtain the first successful handover report.

Manner 2: if the change of the primary secondary cell is change of the primary secondary cell in the SN triggered by the SN, sending the first information to the SN.

In this embodiment, if the SN triggers the change of the primary secondary cell in the SN, the first target network node is the SN node that triggers the change, and the terminal notifies the SN that the first successful handover report has been generated, and the SN may send the second information to the second MN accessed when the terminal generates the first successful handover report, so that the second MN obtains the first successful handover report.

Manner 3: if the change of the primary secondary cell is change of the primary secondary cell in the SN triggered by the SN, sending the first information to the first MN.

In this embodiment, if the SN triggers the change of the primary secondary cell in the SN, the terminal may also send the first information to the accessed first MN to notify the first MN to obtain the first successful handover report. In another embodiment of the present disclosure, if the first MN and the second MN are different nodes, the first MN may send the first successful handover report to the second MN.

In this embodiment, the SN may trigger a PSCell change in the SN through the SRB 3, for example, send an RRC connection reconfiguration message to the UE, and the UE randomly accesses a new PSCell cell in the SN and sends an RRC connection reconfiguration complete message. If the UE triggers generaring the first successful handover report, the RRC connection reconfiguration complete message carries an indication (that is, the first information) that the UE generates the first successful handover report. In this case, since the MN does not know that the PSCell change in the SN occurs and obtaining the first successful handover report cannot be triggered, the MN may obtain the first successful handover report by using the two methods in the manner 2 and the manner 2:
for the manner 2: the SN receives the RRC connection reconfiguration complete message, where the message carries the first information indicating that the UE generates the first successful handover report, and the SN notifies the MN through the Xn interface to obtain (the second information may be sent to the MN), specifically, to use an Xn interface message in the related art or a newly added Xn message, the message includes the UE index information, to instruct the MN to obtain the first successful handover report from the corresponding terminal. After obtaining the first successful handover report, the MN may send the first successful handover report to the SN;
for the manner 3, after the UE records the first successful handover report, the UE notifies the MN node to obtain the first successful handover report, specifically, the UE may actively trigger sending the RRC connection reconfiguration complete message or the newly added message to the MN, where the message carries an indication (that is, the first information) that the UE records the first successful handover report.

In an optional embodiment, after the generating the first successful handover report, the method further includes: encoding the first successful handover report according to an access technology of accessing a first MN by the terminal; or encoding the first successful handover report according to an access technology of accessing a target SN by the terminal; wherein the access technology of the first MN is same as or different from the access technology of the target SN.

In this embodiment, the target SN is an SN accessed by the terminal after performing the addition of the SN or the change of the primary secondary cell. After generating the first successful handover report, the terminal may encode the first successful handover report. The encoding may be performed according to the access technology of the first MN, or may be performed according to the access technology of the target SN successfully accessed by the terminal after SN addition or change of the primary secondary cell.

The access technology of the first MN and the access technology of the target SN may be the same or different. In a case that the access technology of the first MN is different from the access technology of the target SN, for example, in an EN-DC scenario, the first MN is an LTE access technology, the target SN is an NR access technology, and if the first successful handover report is encoded by using an LTE technology, the first MN may decode, but the target SN may not necessarily decode; conversely, if the first successful handover report is encoded by using an NR technology, the first MN cannot perform decoding, and the target SN may perform decoding. Therefore, when the access technology of the first MN and the access technology of the target SN are different, the content of the decoded first successful handover report may be transmitted between the MN and the SN.

For example, the terminal encodes the first successful handover report according to the access technology of the first MN. After obtaining the first successful handover report, the first MN may decode the first successful handover report, and then send the decoded information of the first successful handover report to the SN. The decoded information of the first successful handover report refers to content directly transferred in the Xn interface in an explicit manner, rather than being transferred in a container manner. Optionally, the terminal encodes the first successful handover report according to the access technology of the target SN, and after obtaining the first successful handover report, the first MN cannot decode, may send the first successful handover report to the SN for decoding, and the SN sends the decoded information of the first successful handover report to the first MN after the SN decodes.

In an optional embodiment, the method further includes: receiving a conditional synchronization reconfiguration message, wherein the conditional synchronization reconfiguration message includes a candidate primary secondary cell list and an execution condition corresponding to triggering the terminal to access a candidate primary secondary cell; performing the addition of the SN or the change of the primary secondary cell in a case that the execution condition is met.

In this embodiment, the SN addition or the change of the primary secondary cell is implemented by a conditional synchronization reconfiguration message, and the terminal receives a conditional synchronization reconfiguration message sent by the network side, where the candidate primary secondary cell list and the execution condition of accessing the candidate primary secondary cell in the candidate primary secondary cell list by the terminal is configured in the conditional synchronization reconfiguration message. After receiving the conditional synchronization reconfiguration message, the terminal does not immediately execute the SN addition or the change of the primary secondary cell, but detects the execution condition, and starts to execute the corresponding SN addition/PSCell change operation only when the execution condition is met. Therefore, the candidate primary secondary cell list and the corresponding execution condition configured by the conditional synchronization reconfiguration message are also necessary information for parameter optimization.

The candidate primary secondary cell list and the corresponding execution condition configured by the conditional synchronization reconfiguration message may be stored on the network side, or may be recorded and reported by the terminal in the first successful handover report, which are respectively described below.

In another embodiment provided in the present disclosure, the first successful handover report includes one or more of the following information:
the candidate primary secondary cell list;
the execution condition corresponding to triggering the terminal to access the candidate primary secondary cell;
time length information between first time and second time, the first time being time when the conditional synchronization reconfiguration message is received for last time before the execution condition is met, and the second time being time when determining that the execution condition is met.

In this embodiment, the terminal records the related information of the conditional synchronization reconfiguration message into the first successful handover report. For example, when the terminal satisfies the first trigger condition to generate the first successful handover report, a candidate primary secondary cell and a corresponding execution condition for conditional synchronization reconfiguration are recorded in the first successful handover report.

In addition to recording the candidate primary secondary cell list and the corresponding execution condition of the conditional synchronization reconfiguration, since sending the conditional synchronization reconfiguration to the UE is not executed immediately, but is performed after the execution condition is met, the time period information from the time of receiving the conditional synchronization reconfiguration message by the UE to the time of satisfying the execution condition may also be recorded in the first successful handover report, so that the network side can optimize the configuration parameters of the conditional synchronization reconfiguration, avoiding prematurely configuring the candidate primary secondary cell, and waste the network resources.

Since before the execution condition of the conditional synchronization reconfiguration is met, the network side may send the conditional synchronization reconfiguration message multiple times, to add or modify or delete the candidate primary secondary cell list and the corresponding execution condition, and the time information of recording the first successful handover report is specifically: the time length between the time when the conditional synchronization reconfiguration message is received for last time before the execution condition is met, and the time when the execution condition of the conditional synchronization reconfiguration is met to trigger the handover.

In another embodiment provided in the present disclosure, the first successful handover report includes: association information related to the first successful handover report; identification information, wherein the identification information is used to indicate that the addition of the SN or the change of the primary secondary cell is implemented through a conditional synchronization reconfiguration.

In this embodiment, the network side stores the related information of the conditional synchronization reconfiguration (for example, the candidate primary secondary cell list and/or the corresponding execution condition). The MN always keeps the candidate primary secondary cell list of the conditional synchronization reconfiguration and the corresponding execution condition until the first successful handover report is received. It should be noted that, each time the conditional synchronization reconfiguration implements SN addition/PSCell change, if the network side configures the trigger condition of the successful handover report of the primary secondary cell, the MN needs store the trigger condition. In addition, in order to enable the candidate primary secondary cell list and/or the corresponding execution condition of the conditional synchronization reconfiguration stored by the MN to correspond to the first successful handover report, the association information needs to be added in the first successful handover report, and the association information may be one or more of the following:
a) time type association information, such as time node information and timestamp information;
b) index type association information, for example, an index of the UE, such as a Cell Radio Network Temporary Identifier (C-RNTI);
c) other association information, such as a randomly generated value, etc.

After receiving the first successful handover report, the MN node may search, according to the association information therein and by using the stored candidate primary secondary cell and/or the corresponding execution condition, determine the candidate primary secondary cell and/or the execution condition corresponding to the first successful handover report, and may send the candidate primary secondary cell and/or the execution condition together with the first successful handover report to the second target network node that needs to perform optimization.

The first successful handover report may further record identification information, which is used to indicate that the current SN addition/PSCell change is implemented by using a conditional synchronization reconfiguration, and a candidate primary secondary cell list and a corresponding execution condition corresponding to the conditional synchronization reconfiguration need to be searched on the MN.

In the embodiments of the present disclosure, a successful handover report related to the primary secondary cell is generated in the case of SN addition or change of the primary secondary cell in the MR-DC scenario, so as to record and analyze the problem of the SN addition or the primary secondary cell change, so that the network side can optimize the network node according to the successful handover report.

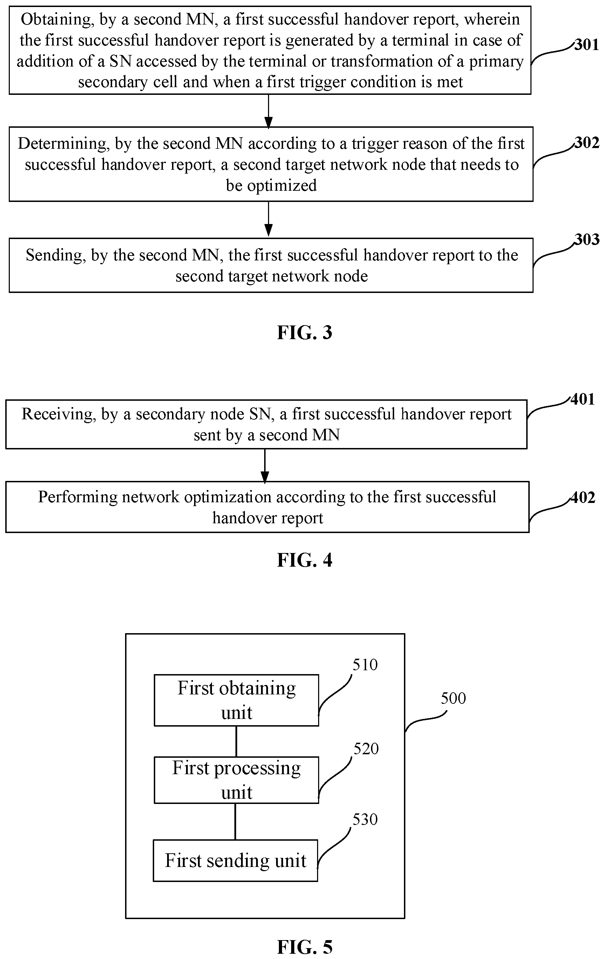

As shown in FIG. 3, an embodiment of the present disclosure further provides a method for processing a successful handover report, applied to a second MN. The method includes following steps.

Step 301: obtaining, by a second MN, a first successful handover report, wherein the first successful handover report is generated by a terminal in case of addition of a SN accessed by the terminal or change of a primary secondary cell and when a first trigger condition is met. The second MN is a MN accessed by the terminal when the terminal generates the first successful handover report.

In this embodiment, when the SN node accessed by the terminal is added or the primary secondary cell (PSCell) is changed, the first successful handover report is generated according to configuration of the trigger condition of the successful handover report of the primary secondary cell when the first trigger condition is met, and the first successful handover report is sent to the first MN currently accessed by the terminal, and the first MN is the first MN accessed when the terminal reports the first successful handover report.

The first MN related to the first successful handover report reported by the terminal may be the same as or different from the second MN, for example, after the terminal generates the first successful handover report, MN handover occurs, and the first MN is different from the second MN. If the second MN is different from the first MN, then after receiving the first successful handover report, the first MN may send the first successful handover report to the second MN.

Step 302: determining, by the second MN according to a trigger reason of the first successful handover report, a second target network node that needs to perform optimization.

Step 303: sending, by the second MN, the first successful handover report to the second target network node.

In this embodiment, the first successful handover report may include a trigger reason for generating the first successful handover report, the second MN may determine, based on the trigger reason, a second target network node that needs to perform optimization, and send the first successful handover report to the second target network node, and the second target network node may perform network parameter optimization based on the first successful handover report.

In the embodiments of the present disclosure, the terminal may generate a successful handover report related to the primary secondary cell in the case of SN addition or change of the primary secondary cell in the MR-DC scenario, so as to record and analyze the problem of the SN addition or the change of the primary secondary cell, and the MN node sends the first successful handover report to the network node that needs to perform optimization, so as to optimize the network node.

In an optional embodiment, the obtaining a first successful handover report includes one of the following:
(1) receiving the first successful handover report sent by the terminal;
   in this embodiment, the second MN may be an MN accessed when the terminal reports the first successful handover report, that is, the second MN is the same as the first MN, and after the terminal generates the first successful handover report, the terminal directly sends the first successful handover report to the second MN;
(2) receiving the first successful handover report sent by the first MN, where the first MN is an MN accessed when the terminal reports the first successful handover report.

In this embodiment, when the second MN is different from the MN (that is, the first MN) accessed by the terminal when the terminal reports the first successful handover report, then after the terminal reports the first successful handover report to the first MN, the first MN transfers the first successful handover report to the second MN.

In this embodiment, since the MN that receives the first successful handover report sent by the terminal may not be the MN accessed by the UE when the UE generates the first successful handover report, the first successful handover report is first to be transmitted to the MN (i.e., the second MN) accessed when the UE generates the first successful handover report, and in another embodiment provided in the present disclosure, the first successful handover report may be transmitted on the XN and/or NG interface. If the first successful handover report is transmitted through the XN interface, Access and Mobility Indication may be reused; and if the NG interface is used to transmit the first successful handover report, an Uplink RAN Configuration Transfer message (UPLINK RAN CONFIGURATION TRANSFER) and a Downlink RAN Configuration Transfer (DOWNLINK RAN CONFIGURATION TRANSFER) message may be reused for transmission.

In another embodiment provided in the present disclosure, the first successful handover report includes one of the following:
A: related information of a primary secondary cell;
   in this embodiment, the first successful handover report may be a successful handover report of the primary secondary cell, and the successful handover report of the primary secondary cell includes related information of the primary secondary cell; when the terminal meets the first trigger condition, the first successful handover report is generated, where the first successful handover report includes related information of the primary secondary cell; in this case, the generated first successful handover report (which may be the successful handover report of the primary secondary cell) and the successful handover report of the primary cell generated when the terminal performs the traditional PCell handover are two independent successful handover reports;
   if the terminal satisfies the first trigger condition and the second trigger condition for generating the successful handover report of the primary cell at the same time, then on the basis that the successful handover report of the PCell, another PSCell successful handover report is newly added, that is, the first successful handover report (which may be the successful handover report of the primary secondary cell) and the successful handover report of the primary cell are respectively generated, the successful handover report of the primary secondary cell includes the related information of the primary secondary cell, and the successful handover report of the primary cell includes the related information of the primary cell;
   in another embodiment of the present disclosure, the related information of the primary secondary cell includes one or more of the following:
      report triggering reason;
      a cell identifier of a second primary secondary cell accessed by the terminal;
      a measurement result of a second primary secondary cell accessed by the terminal;
      a cell identifier of a first primary secondary cell accessed by the terminal;
      a measurement result of a first primary secondary cell accessed by the terminal;
      a measurement result of a neighboring cell of a first primary secondary cell accessed by the terminal;
      random access information of the terminal accessing the first primary secondary cell;
      trigger node information in case of SN addition;
      trigger node information during change of the primary secondary cell.
B: related information of the primary cell accessed by the terminal and related information of the primary secondary cell accessed by the terminal;
   in this case, the first successful handover report is a report that may include the related information of the primary cell and the related information of the primary secondary cell at the same time; if the terminal satisfies the first trigger condition and the second trigger condition for generating the successful handover report of the primary cell at the same time, only one first successful handover report is generated, which includes related information of the primary cell and related information of the primary secondary cell;
   in another embodiment of the present disclosure, in this case, if the terminal only meets the first trigger condition, the generated first successful handover report only includes the related information of the primary secondary cell; and if the terminal only meets the second trigger condition, the generated first successful handover report only includes the related information of the primary cell.
C: related information of a primary cell accessed by the terminal.
   in this embodiment, since the PCell handover failure will cause abnormal release (i.e. dropped call) in the communication process, the user experience is the worst; while the PSCell fails and the service rate is reduced, the relative impact is relatively small; therefore, when the terminal satisfies the first trigger condition and the second trigger condition at the same time, the priority of solving the problem of the primary cell is highest, and only the first successful handover report (which may be the successful handover report of the primary cell) containing the related information of the primary cell is generated.

It should be noted that the first successful handover report received by the second MN may include any one of the foregoing information. If the first successful handover report is a successful handover report of the primary cell, the second MN does not need to send the SN to the first successful handover report.

In an optional embodiment, the determining a second target network node to be optimized according to a trigger reason of the first successful handover report includes one of the following: if the trigger reason of the first successful handover report is that the timing time of the first timer is greater than the threshold of the first timer, determining that the second target network node includes one or more of the following: a trigger node for SN addition or change of the primary secondary cell, and a target SN accessed by the terminal;
if the trigger reason of the first successful handover report is that the timing time of the second timer is greater than the threshold of the second timer, determining that the second target network node includes one or more of the following: the trigger node for the SN addition or the change of the primary secondary cell, the source SN accessed by the terminal before the change of the primary secondary cell, and the third MN accessed by the terminal when SN addition or change of the primary secondary cell;
if the trigger reason of the first successful handover report is that the timing time of the third timer is greater than the threshold of the third timer, determining that the second target network node is the trigger node for the SN addition or the change of the primary secondary cell.

In this embodiment, the first timer is, for example, a T304 timer or another newly added timer, and the first timer is configured to determine whether the random access duration in the process of accessing the first primary secondary cell by the terminal expires when the SN accessed by the terminal is added or the primary secondary cell is changed.

The second timer is, for example, a T310 timer or another newly added timer, and the second timer is configured to determine whether a critical radio link failure occurs in the second primary secondary cell accessed by the terminal when the SN received by the terminal is added or the primary secondary cell is changed.

The third timer is, for example, a T312 timer or another newly added timer, and the third timer is configured to determine whether the SN addition or the change of the primary secondary cell meets a trigger time requirement, that is, whether the SN addition or the change of the primary secondary cell is triggered in time.

Taking the first timer being a T304 timer, the second timer being a T310 timer, the third timer being a T312 timer as an example, and a correspondence between a trigger reason of the first successful handover report and a second target network node is shown in Table 1:

**TABLE 1**

| | Second target network node when MN triggers SN addition/PSCell change | Second target network node when the source SN triggers PSCell change |
|---|---|---|
| T304 triggers to generate first successful handover report | MN and/or target SN | Source SN and/or target SN |
| T310 triggers to generate first successful handover report | MN and/or source SN | MN and/or source SN |
| T312 triggers to generate first successful handover report | MN | Source SN |

When T304 triggers to generate the first successful handover report, the target PSCell access has a critical failure, which may be that the MN triggers the SN addition/PSCell change, or the opportunity for the source SN to trigger the PSCell change is too early, the MN or the source SN is required to adjust the parameter optimization trigger occasion, or the random access parameter allocated by the target SN is not reasonable, so the target SN may also need to perform optimization.

When T310 triggers generation of the first successful handover report, the source PSCell has a critical failure, which may be that the MN triggers SN addition/PSCell change, or the opportunity for the source SN to trigger the PSCell change is too late, the MN and/or the source SN are required to adjust the parameter optimization trigger occasion. It should be particularly noted that the too late trigger time may require the MN and the source SN to perform optimization at the same time, because even if the MN triggers the PSCell change too late, the source SN may not trigger before the MN triggers, and this is also possibly problematic; and on the other hand, it may also be possible that the unreasonable source SN configuration parameter causes occurrence of a critical failure, and thus may also require the source SN to perform optimization.

When T312 triggers generation of the first successful handover report, the trigger node does not trigger the SN addition/PSCell change in time, and therefore, the corresponding trigger node needs to perform optimization.

Based on the foregoing analysis, after obtaining the first successful handover report, the MN needs to send the first successful handover report to the corresponding SN node according to the analysis result in Table 1, and it is necessary to add an inter-node message to transfer the first successful handover report. Optionally, the first successful handover report which may be optional may be added to the message ACCESS AND MOBILITY INDICATION in the related art.

In this embodiment, since the MN that receives the first successful handover report sent by the terminal is not necessarily the MN accessed when the UE generates the first successful handover report, different MN nodes first need to transmit the first successful handover report to the MN node accessed by the UE when the UE generates the first successful handover report, so it is necessary to transfer the PSCell successful handover report on the XN and/or NG interface, the XN interface may use the ACCESS AND MOBILITY INDICAITON message, the NG interface may use UPLINK RAN CONFIGURATION TRANSFER and DOWNLINK RAN CONFIGURATION TRASFER messages for transfer.

In an optional embodiment, the receiving, by the receiving terminal, the first successful handover report includes: sending a terminal information acquisition request message to the terminal; receiving a response message sent by the terminal, wherein the response message includes the first successful handover report.

In this embodiment, after the terminal generates the first successful handover report, the terminal sends the first information to the first target network node to notify the network side that the first successful handover report has been generated. If the first target network node is the second MN, the second MN may directly send the terminal information acquisition request message to the terminal to obtain the first successful handover report; if the first target network node is an SN, the SN may send second information to the second MN to notify the second MN that the first successful handover report has been generated, and the second MN may obtain the first successful handover report by sending a terminal information acquisition request message to the terminal.

In another embodiment of the present disclosure, before sending the terminal information acquisition request message to the terminal, the method further includes:
receiving first information sent by a terminal; or, receiving second information sent by an SN node, wherein the second information is sent after the SN node receives the first information sent by the terminal, and the second information comprises index information of the terminal; and the first information and/or the second information indicate that the terminal has generated the first successful handover report.

In this embodiment, after the terminal generates the first successful handover report, the terminal sends the first information to the first target network node to notify the network side that the first successful handover report has been generated. If the second MN is the first target network node, that is, the second MN is the same as the first MN, and the terminal sends the first information to the second MN to notify the second MN that the first successful handover report has been generated, the second MN may obtain the first successful handover report by using the terminal information acquisition request message.

When the change of the primary secondary cell is a change of the primary secondary cell in the SN triggered by the SN, the terminal sends the first information to the SN, the SN is the first target network node, and the SN may send second information to the second MN to notify the second MN that the first successful handover report has been generated. The second information includes index information of the terminal, and the second MN may obtain the first successful handover report to a corresponding terminal according to the index information.

In another embodiment of the present disclosure, the first information is carried by one or more messages: an RRC connection establishment completion message; an RRC connection re-establishment completion message; an RRC connection reconfiguration completion message; and an RRC connection recovery completion message.

In another embodiment provided in the present disclosure, the first information may further be carried by another message other than the foregoing message.

In this embodiment, the indication information may be added to any one or more of the RRC connection establishment completion message, the RRC connection reestablishment completion message, the RRC connection reconfiguration complete message, and the RRC connection resume complete message, the indication information indicates that the UE records the first successful handover report. In another embodiment provided in the present disclosure, the first information may indicate that the UE simultaneously records the successful handover report of the primary cell and the successful handover report of the primary secondary cell, or indicates that the UE records the successful handover report of the primary cell, or indicates that the UE records the successful handover report of the primary secondary cell.

In another embodiment of the present disclosure, the sending the first successful handover report to the second target network node includes:
reusing a transmission message of a first interface and/or a second interface to send the first successful handover report to the second target network node; wherein the first interface is a network interface between radio access network nodes, and the second interface is a network interface between a radio access network node and a core network node.

In this embodiment, the first interface, for example, an XN interface, may reuse an ACCESS AND MOBILITY INDICATION message of the XN interface to transmit the first successful handover report. For example, the second interface, for example, an NG interface, may reused UPLINK RAN CONFIGURATION TRANSFER and DOWNLINK RAN CONFIGURATION TRANSFER messages of the NG interface to transmit the first successful handover report.

In an optional embodiment, the method further includes: sending a conditional synchronization reconfiguration message to the terminal, where the conditional synchronization reconfiguration message includes a candidate primary secondary cell list and an execution condition corresponding to triggering the terminal to access the candidate primary secondary cell.

In this embodiment, the SN addition or the change of the primary secondary cell is implemented by a conditional synchronization reconfiguration, and the network side sends a conditional synchronization reconfiguration message to the terminal, the conditional synchronization reconfiguration messages configures the candidate primary secondary cell list and the execution condition of accessing the candidate primary secondary cell in the candidate primary secondary cell list by the terminal. After receiving the conditional synchronization reconfiguration message, the terminal does not immediately execute the SN addition or the change of the primary secondary cell, but detects an execution condition, and starts to execute the corresponding SN addition/PSCell change operation only when the execution condition is met.

The candidate primary secondary cell list and the corresponding execution condition related to the conditional synchronization reconfiguration may be stored on the network side, or may be recorded and reported by the terminal in the first successful handover report, which are respectively described below.

In another embodiment provided in the present disclosure, the first successful handover report includes one or more of the following information:
a candidate primary secondary cell list;
an execution condition corresponding to triggering the terminal to access a candidate primary secondary cell;
time length information between first time and second time, the first time being time when the conditional synchronization reconfiguration message is received for last time before the execution condition is met, and the second time being time when determining that the execution condition is met.

In this embodiment, the terminal records the related information of the conditional synchronization reconfiguration in the first successful handover report. For example, when the terminal satisfies the first trigger condition to generate the first successful handover report, a candidate primary secondary cell and a corresponding execution condition for conditional synchronization reconfiguration are recorded in the first successful handover report.

In addition to recording the candidate primary secondary cell list and the corresponding execution condition of the conditional synchronization reconfiguration, since the conditional synchronization reconfiguration sent to the UE is not executed immediately, but is executed when the execution condition is met, the time period information from the time of receiving the conditional synchronization reconfiguration message by the UE to the time of satisfying the execution condition may also be recorded in the first successful handover report, and the network side may optimize configuration parameters of the conditional synchronization reconfiguration according to the information recorded in the first successful handover report, so as to avoid prematurely configuring the candidate primary secondary cell and wasting network resources.

Since the network side may send the conditional synchronization reconfiguration message multiple times before the execution condition of the conditional synchronization reconfiguration is met, to add or modify or delete the candidate primary secondary cell list and the corresponding execution condition multiple times, and the time information of recording the first successful handover report is specifically: the time length between the time when the conditional synchronization reconfiguration message is received for last time by the UE before the execution condition is met, and the time when the execution condition of the conditional synchronization reconfiguration is met to trigger the handover.

In another embodiment provided in the present disclosure, the first successful handover report includes: association information related to the first successful handover report; identification information, wherein the identification information is used to indicate that the addition of the SN or the change of the primary secondary cell is implemented through a conditional synchronization reconfiguration.

In this embodiment, the network side stores the related information of the conditional synchronization reconfiguration (for example, the candidate primary secondary cell list and/or the corresponding execution condition). The MN always keeps the candidate primary secondary cell list of the conditional synchronization reconfiguration and the corresponding execution condition until the first successful handover report is received. It should be noted that, each time the conditional synchronization reconfiguration implements SN addition/PSCell change, if the network side configures the trigger condition of the successful handover report of the primary secondary cell, the MN needs store the trigger condition. In addition, in order to enable the candidate primary secondary cell list and/or the corresponding execution condition of the conditional synchronization reconfiguration stored by the MN to correspond to the first successful handover report, the association information needs to be added in the first successful handover report, and the association information may be one or more of the following:
a) time type association information, such as time node information and timestamp information;
b) index type association information, for example, a Cell Radio Network Temporary Identifier (C-RNTI) of the UE;
c) other association information, such as a randomly generated value, etc.

In another embodiment of the present disclosure, the method further includes:
searching, according to the association information, a candidate primary secondary cell list corresponding to the first successful handover report and/or an execution condition corresponding to triggering the terminal to access a candidate primary secondary cell;
sending, to the second target network node, the candidate primary secondary cell list and/or the execution condition corresponding to triggering the terminal to access the candidate primary secondary cell.

In this embodiment, after receiving the first successful handover report, the second MN node may search, according to the association information therein and by using the stored candidate primary secondary cell list and/or the corresponding execution condition, determine the candidate primary secondary cell and/or the execution condition corresponding to the first successful handover report, and may send the candidate primary secondary cell and/or the execution condition together with the first successful handover report to the second target network node that needs to perform optimization.

The first successful handover report may further record identification information, which is used to indicate that the current SN addition/PSCell change is implemented by using a conditional synchronization reconfiguration, and a candidate primary secondary cell list and a corresponding execution condition corresponding to the conditional synchronization reconfiguration need to be searched on the MN.

In an optional embodiment, the sending the first successful handover report to the second target network node includes:
sending an un-decoded first successful handover report to the second target network node; or
decoding the first successful handover report; and sending the decoded first successful handover report to the second target network node.

In another embodiment of the present disclosure, the method further includes: receiving some or all of information of the decoded first successful handover report sent by the second target network node.

In this embodiment, after the terminal generates the first successful handover report, the first successful handover report may be encoded by the terminal. The encoding may be performed according to the access technology of the MN, or may be encoded according to the access technology of the SN successfully accessed by the terminal after SN addition or change of the primary secondary cell.

The access technology of the MN and the access technology of the SN may be the same or different. When the access technology of the MN and the access technology of the SN are different, the content of the decoded first successful handover report may be transmitted between the MN and the SN.

The terminal encodes the first successful handover report according to the access technology of the MN. After obtaining the first successful handover report, the MN may decode the first successful handover report, and then send the decoded information of the first successful handover report to the SN (i.e., the second target network node). The decoded information of the first successful handover report refers to content directly transferred in the XN interface in an explicit manner, rather than being transferred in a container manner. Optionally, the terminal encodes the first successful handover report according to the access technology of the SN, and after obtaining the first successful handover report, the MN cannot decode, may send the first successful handover report to the SN for decoding, and the SN sends the decoded information of the first successful handover report to the MN after the SN decodes.

In the embodiments of the present disclosure, a successful handover report related to the primary secondary cell is generated in the case of SN addition or change of the primary secondary cell in the MR-DC scenario, so as to record and analyze the problem of the SN addition or the primary secondary cell change, and the MN nodes sends the first successfully handover report to the network node needing to perform optimization, so that the network side can optimize the network node.

As shown in FIG. 4, an embodiment of the present disclosure further provides a method for processing a successful handover report applied to an SN. The method includes following steps: Step 401: receiving, by a secondary node SN, a first successful handover report sent by a second MN;
Step 402: performing network optimization according to the first successful handover report;
wherein the first successful handover report is generated in case of addition of a SN accessed by a terminal or change of a primary secondary cell and when a first trigger condition is met. In another embodiment of the present disclosure, the second MN is an MN accessed when the terminal generates the first successful handover report.

In this embodiment, the SN is a second target network node that needs to perform optimization, and the second MN determines, based on the obtained trigger reason of the first successful handover report, that the second target network node that needs to perform optimization is an SN, and the second MN sends the first successful handover report to the SN, and the SN performs network optimization based on the content recorded in the first successful handover report, for example, optimizes network parameters. It should be noted that the SN may be the source SN and/or the target SN accessed by the terminal when the primary secondary cell is changed, or the target SN accessed by the terminal when the SN addition or the change of the primary secondary cell occurs.

In the embodiments of the present disclosure, the terminal may generate a successful handover report related to the primary secondary cell in the case of SN addition or change of the primary secondary cell in the MR-DC scenario, record the problem and analysis in case of the SN additions or the change of the primary secondary cell in the first successful handover report, the MN node sends the first successful handover report to the SN node that needs to perform optimization, and the SN node may implement network optimization according to the first successful handover report.

In an optional embodiment, before receiving the first successful handover report sent by the second MN, the method further includes:
receiving first information sent by the terminal;
sending second information to the second MN according to the first information, wherein the second information includes index information of the terminal; wherein the first information and/or the second information indicate that the terminal has generated the first successful handover report.

In this embodiment, if the change of the primary secondary cell is the change of the primary secondary cell in the SN triggered by the SN, the terminal sends the first information to the SN, and the terminal notifies the SN that the first successful handover report has been generated. After receiving the first information, the SN may send second information to a second MN accessed when the terminal generates the first successful handover report, where the second information includes index information of the terminal, and the second MN may obtain the first successful handover report to a corresponding terminal based on the index information.

In an optional embodiment, the first successful handover report includes one of the following A to C.
A: related information of a primary secondary cell.

In this embodiment, the first successful handover report may be a successful handover report of the primary secondary cell, and the successful handover report of the primary secondary cell includes related information of the primary secondary cell. When the terminal meets the first trigger condition, the first successful handover report is generated, where the first successful handover report includes related information of the primary secondary cell. In this case, the generated first successful handover report (which may be the successful handover report of the primary secondary cell) and the successful handover report of the primary cell generated when the terminal performs the traditional PCell handover are two independent successful handover reports.

If the terminal satisfies the first trigger condition and the second trigger condition for generating the successful handover report of the primary cell at the same time, then on the basis that the successful handover report of the PCell, another successful handover report of the PSCell is newly added, that is, the first successful handover report (which may be the successful handover report of the primary secondary cell) and the successful handover report of the primary cell are respectively generated, the first successful handover report includes the related information of the primary secondary cell, and the successful handover report of the primary cell includes the related information of the primary cell.

After the terminal sends the successful handover report of the primary secondary cell to the first MN, if the first MN is not the second MN when the terminal generates the first successful handover report, the first MN sends the successful handover report of the primary secondary cell to the second MN, and the second MN determines according to the successful handover report of the primary secondary cel the SN node that needs to perform optimization, and sends the successful handover report of the primary secondary cell to the SN node. The SN may perform network optimization according to the analysis contents of the SN addition or the change of the primary secondary cell recorded in the successful handover report of the primary secondary cell.

B: related information of a primary cell accessed by the terminal and related information of a primary secondary cell accessed by the terminal.

The first successful handover report is a report that may include both the related information of the primary cell and the related information of the primary secondary cell. If the terminal satisfies the first trigger condition and the second trigger condition for generating the successful handover report of the primary cell at the same time, only one first successful handover report is generated which includes related information of the primary cell and related information of the primary secondary cell.

In another embodiment of the present disclosure, in this case, if the terminal only meets the first trigger condition, the generated first successful handover report only includes the related information of the primary secondary cell; and if the terminal only meets the second trigger condition, the generated first successful handover report only includes the related information of the primary cell.

After the terminal sends the successful handover report of the primary secondary cell to the first MN, and if the first MN is not the second MN when the terminal generates the first successful handover report, then the first MN sends the first successful handover report to the second MN, and the second MN determines according to the first successful handover report a network node needing to perform optimization. If the related information of the primary secondary cell is recorded in the first successful handover report, the SN needs to perform optimization, and the second MN sends the first successful handover report to the SN node. If only the related information of the primary cell is recorded in the first successful handover report, there is no need to send that to the SN node.

In another embodiment of the present disclosure, the first information is carried by one or more following messages: an RRC connection establishment completion message; an RRC connection re-establishment completion message; an RRC connection reconfiguration completion message; and an RRC connection recovery completion message.

In another embodiment provided in the present disclosure, the first information may further be carried by another message other than the foregoing message.

In this embodiment, the indication information may be added to any one or more of the RRC connection establishment completion message, the RRC connection reestablishment completion message, the RRC connection reconfiguration complete message, and the RRC connection resume complete message, and it is indicated that the UE records the first successful handover report. In another embodiment provided in the present disclosure, the first information may indicate that the UE simultaneously records the successful handover report of the primary cell and the successful handover report of the primary secondary cell, or indicates that the UE records the successful handover report of the primary cell, or indicates that the UE records the successful handover report of the primary secondary cell.

In another embodiment of the present disclosure, the second information is a first interface message;
The first interface is a network interface between radio access network nodes.

In this embodiment, when the SN sends the second information to the second MN, the second information may be transmitted by using the first interface message. The first interface is for example an XN interface, and may be used to transmit the second information.

In another embodiment of the present disclosure, after receiving the first successful handover report sent by the MN, the method includes: decoding the first successful handover report.

In another embodiment provided in the present disclosure, the method further includes: sending, to the second MN, some or all of the information decoded after the first successful handover report.

In this embodiment, after the terminal generates the first successful handover report, the first successful handover report may be encoded. The coding may be performed according to the access technology of the MN, or may be coded according to the access technology of the SN successfully accessed by the terminal after the SN is added or the primary secondary cell is changed, and the access technology of the MN and the access technology of the SN may be the same or different. The terminal encodes the first successful handover report according to the access technology of the SN, and after obtaining the first successful handover report, the MN cannot decode the first successful handover report, may send the first successful handover report to the SN for decoding, and after the SN decodes the first successfully handover report, the SN returns the decoded information of the first successful handover report to the MN.

In another embodiment of the present disclosure, the method further includes: receiving, from the second MN, a candidate primary secondary cell list and/or an execution condition corresponding to triggering the terminal to access the candidate primary secondary cell.

In this embodiment, the SN is a network node that needs to perform optimization. After receiving the first successful handover report, the second MN may search, according to the association information therein, from the stored candidate primary secondary cell list and/or the corresponding execution condition, and determine the candidate primary secondary cell and/or the execution condition corresponding to the first successful handover report, and may send the candidate primary secondary cell and/or the execution condition together with the first successful handover report to the SN node that needs to perform optimization. After receiving the candidate primary secondary cell list and/or the execution condition, the SN may perform network optimization on the primary secondary cell accessed by the terminal.

In the embodiments of the present disclosure, the terminal may generate a successful handover report related to the primary secondary cell in the case of SN addition or change of the primary secondary cell in the MR-DC scenario, record the problem and analysis in case of the SN addition or the change of the primary secondary cell in the first successful handover report, the MN node sends the first successful handover report to the SN node that needs to perform optimization, and the SN node may implement network optimization according to the first successful handover report.

The foregoing embodiments describe the method for processing a successful handover report of the present disclosure, and the following embodiments will be further described with reference to the accompanying drawings.

Specifically, as shown in FIG. 5, an embodiment of the present disclosure provides a processing apparatus 500 for a successful handover report, which is applied to a terminal and includes:
a first obtaining unit 510, configured to obtain configuration information of a first trigger condition for generating a successful handover report of a primary secondary cell;
a first processing unit 520, configured to in case of addition of a secondary node SN accessed by the terminal or change of the primary secondary cell, generate a first successful handover report according to the configuration information, when determining that the first trigger condition is met; and
a first sending unit 530, configured to send the first successful handover report to a first master node MN accessed by the terminal.

In another embodiment of the present disclosure, the first trigger condition includes: that a current value of a timer is greater than a threshold of the timer when the terminal successfully accesses a first primary secondary cell.

In another embodiment provided in the present disclosure, the first successful handover report includes one of the following:
related information of the primary secondary cell;
related information of a primary cell accessed by the terminal and related information of the primary secondary cell accessed by the terminal;
related information of a primary cell accessed by the terminal.

In another embodiment of the present disclosure, the related information of the primary secondary cell includes one or more of the following:
a report triggering reason; a cell identifier of a second primary secondary cell accessed by the terminal; a measurement result of a second primary secondary cell accessed by the terminal; a cell identifier of a first primary secondary cell accessed by the terminal; a measurement result of a first primary secondary cell accessed by the terminal; a measurement result of a neighboring cell of a first primary secondary cell accessed by the terminal; random access information of accessing a first primary secondary cell by the terminal; trigger node information in case of SN addition; trigger node information during change of the primary secondary cell.

In another embodiment of the present disclosure, the first processing unit is specifically configured to: when determining that the first trigger condition is met and when a second trigger condition of a successful handover report of the primary cell is met, record related information of the primary cell; and generate the first successful handover report according to the related information of the primary cell.

In another embodiment of the present disclosure, the first processing unit is specifically configured to perform one of the following: if time of determining that the second trigger condition is met is earlier than time of determining that the first trigger condition is met, then recording the related information of the primary cell; if time of determining that the first trigger condition is met is earlier than time of determining that the second trigger condition is met, then recording the related information of the primary secondary cell when the first trigger condition is met, and when the second trigger condition is met, recording the related information of the primary cell and deleting the related information of the primary secondary cell.

In another embodiment provided in the present disclosure, the device further includes: a third sending unit, configured to send first information to a first target network node, wherein the first information indicates that the terminal has generated the first successful handover report; and a second receiving unit, configured to receive a terminal information obtaining request message sent by a first MN.

The first sending unit is specifically configured to send a response message to the first MN, where the response message includes the first successful handover report.

In another embodiment of the present disclosure, the first information is carried by one or more of following messages:
a radio resource control (RRC) connection establishment complete message;
an RRC connection re-establishment complete message;
an RRC connection reconfiguration complete message;
an RRC connection resume complete message

In another embodiment provided in the present disclosure, the third sending unit is specifically configured to perform one of the following:
sending the first information to the first MN;
if the change of the primary secondary cell is change of the primary secondary cell in the SN triggered by the SN, sending the first information to the SN;
if the change of the primary secondary cell is change of the primary secondary cell in the SN triggered by the SN, sending the first information to the first MN.

In another embodiment of the present disclosure, the first information is sent after the terminal successfully accesses a first primary secondary cell and generates the first successful handover report.

In another embodiment provided in the present disclosure, the device further includes: an encoding unit, where the encoding unit is specifically configured for:
encoding the first successful handover report according to an access technology of accessing a first MN by the terminal; or
encoding the first successful handover report according to an access technology of accessing a target SN by the terminal;
wherein the access technology of the first MN is same as or different from the access technology of the target SN.

In another embodiment of the present disclosure, the device further includes: a third receiving unit, configured to receive a conditional synchronization reconfiguration message, wherein the conditional synchronization reconfiguration message includes a candidate primary secondary cell list and an execution condition corresponding to triggering the terminal to access a candidate primary secondary cell; and a first execution unit, configured to: perform the addition of the SN or the change of the primary secondary cell in a case that the execution condition is met.

In another embodiment provided in the present disclosure, the first successful handover report includes one or more of the following information:
the candidate primary secondary cell list;
the execution condition corresponding to triggering the terminal to access the candidate primary secondary cell;
time length information between first time and second time, the first time being time when the conditional synchronization reconfiguration message is received for last time before the execution condition is met, and the second time being time when determining that the execution condition is met.

In another embodiment provided in the present disclosure, the first successful handover report includes:
association information related to the first successful handover report;
identification information, wherein the identification information is used to indicate that the addition of the SN or the change of the primary secondary cell is implemented through a conditional synchronization reconfiguration.

It should be noted that the above-mentioned apparatus provided in the embodiments of the present disclosure can implement all method steps implemented by the above method embodiments applied to the terminal, and can achieve the same technical effect, which will not be specifically described in detail in the same parts and beneficial effects of the method embodiments in this embodiment.

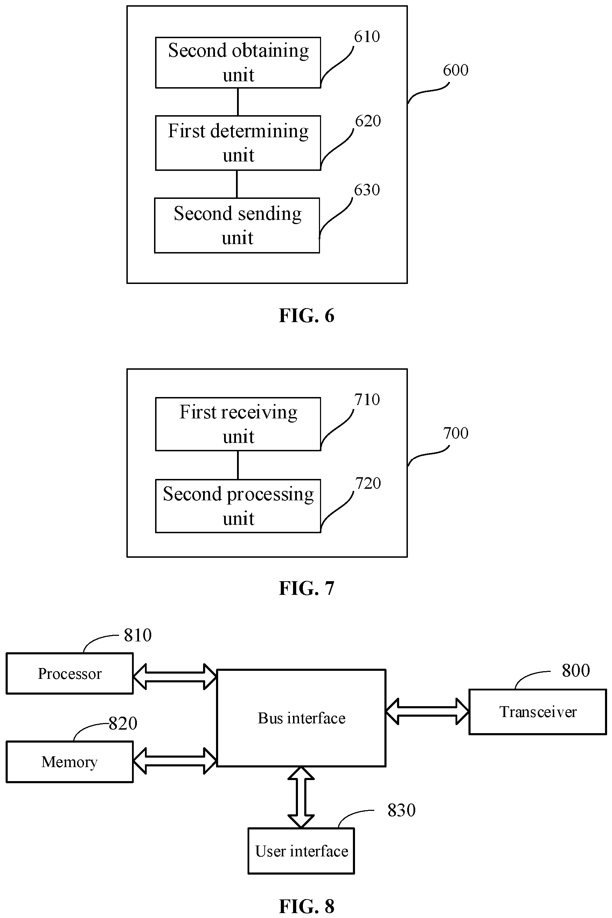

Specifically, as shown in FIG. 6, an embodiment of the present disclosure provides a processing apparatus 600 for a successful handover report, applied to a second MN. The processing apparatus 600 includes: a second obtaining unit 610, configured to obtain, a first successful handover report, wherein the first successful handover report is generated by a terminal in case of addition of a SN accessed by the terminal or change of a primary secondary cell and when a first trigger condition is met; a first determining unit 620, configured to determine, according to a trigger reason of the first successful handover report, a second target network node that needs to perform optimization; and a second sending unit 630, configured to send the first successful handover report to the second target network node.

In another embodiment of the present disclosure, the second obtaining unit is configured to perform one of the following:
receiving the first successful handover report sent by the terminal;
receiving the first successful handover report sent by the first MN, wherein the first MN is an MN accessed when the terminal reports the first successful handover report.

In another embodiment provided in the present disclosure, the first successful handover report includes one of the following:
related information of the primary secondary cell;
related information of a primary cell accessed by the terminal and related information of a primary secondary cell;
related information of a primary cell accessed by the terminal.

In another embodiment of the present disclosure, the related information of the primary secondary cell includes one or more of the following:
report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of the terminal accessing the first primary secondary cell;
trigger node information in case of SN addition;
trigger node information during change of the primary secondary cell.

In another embodiment of the present disclosure, the first determining unit is configured to perform one of the following:
if the trigger reason of the first successful handover report is that timing time of a first timer is greater than a threshold of the first timer, determining that the second target network node includes one or more of the following: a trigger node for the addition of the SN or the change of the primary secondary cell, a target SN accessed by the terminal;
if the trigger reason of the first successful handover report is that timing time of a second timer is greater than a threshold of the second timer, determining that the second target network node includes one or more of the following: a trigger node for the addition of the SN or the change of the primary secondary cell, a source SN accessed by the terminal before the change of the primary secondary cell, and a third MN accessed by the terminal when triggering the addition of the SN or the change of the primary secondary cell;
if the trigger reason of the first successful handover report is that timing time of a third timer is greater than a threshold of the third timer, determining that the second target network node is a node triggering the addition of the SN or the change of the primary secondary cell.

In another embodiment of the present disclosure, the second obtaining unit is specifically configured to:
send a terminal information acquisition request message to the terminal;
receive a response message sent by the terminal, wherein the response message includes the first successful handover report.

In another embodiment of the present disclosure, the device further includes a fourth receiving unit, where the fourth receiving unit is configured to:
receiving first information sent by a terminal; or
receiving second information sent by an SN node, wherein the second information is sent after the SN node receives the first information sent by the terminal, and the second information includes index information of the terminal; wherein the first information and/or the second information indicate that the terminal has generated the first successful handover report.

In another embodiment of the present disclosure, the first information is carried by one or more of following messages:
a radio resource control (RRC) connection establishment complete message;
an RRC connection re-establishment complete message;
an RRC connection reconfiguration complete message;
an RRC connection resume complete message.

In another embodiment provided in the present disclosure, the second sending unit is specifically configured to: reuse a transmission message of a first interface and/or a second interface to send the first successful handover report to the second target network node; wherein the first interface is a network interface between radio access network nodes, and the second interface is a network interface between a radio access network node and a core network node.

In another embodiment provided in the present disclosure, the first successful handover report includes one or more of the following information:
a candidate primary secondary cell list;
an execution condition corresponding to triggering the terminal to access a candidate primary secondary cell;
time length information between first time and second time, the first time being time when the conditional synchronization reconfiguration message is received for last time before the execution condition is met, and the second time being time when determining that the execution condition is met.

In another embodiment provided in the present disclosure, the first successful handover report includes:
association information related to the first successful handover report;
identification information, wherein the identification information is used to indicate that the addition of the SN or the change of the primary secondary cell is implemented through a conditional synchronization reconfiguration.

In another embodiment provided in the present disclosure, the device further includes: a searching unit, configured to search, according to the association information, a candidate primary secondary cell list corresponding to the first successful handover report and/or an execution condition corresponding to triggering the terminal to access a candidate primary secondary cell; and a fourth sending unit, configured to send the candidate primary secondary cell list to the second target network node and/or an execution condition corresponding to triggering the terminal to access the candidate primary cell.

In another embodiment provided in the present disclosure, the device further includes: a fifth sending unit, configured to send a conditional synchronization reconfiguration message to the terminal, wherein the conditional synchronization reconfiguration message includes the candidate primary secondary cell list and the execution condition corresponding to triggering the terminal to access the candidate primary secondary cell.

In another embodiment provided in the present disclosure, the second sending unit is specifically configured to: send an un-decoded first successful handover report to the second target network node; or decode the first successful handover report; and send the decoded first successful handover report to the second target network node.

In another embodiment provided in the present disclosure, the device further includes: a fifth receiving unit, configured to receive some or all of information of the decoded first successful handover report sent by the second target network node.

It should be noted that, the above apparatus provided in the embodiments of the present disclosure can implement all method steps implemented by the method embodiments applied to the second MN, and can achieve the same technical effect, which will not be specifically described in detail in this embodiment and the beneficial effects that are the same as those in the method embodiment.

Specifically, as shown in FIG. 7, an embodiment of the present disclosure provides a processing apparatus 700 for successful handover report, applied to an SN. The apparatus includes:
a first receiving unit 710, configured to receive a first successful handover report sent by a second MN;
a second processing unit 720, configured to perform network optimization according to the first successful handover report; wherein the first successful handover report is generated in case of addition of a SN accessed by a terminal or change of a primary secondary cell and when a first trigger condition is met.The second MN is an MN accessed by the terminal when the terminal generates the first successful handover report.

In another embodiment provided in the present disclosure, the device further includes: a sixth receiving unit, configured to receive first information sent by a terminal; and a sixth sending unit, configured to send second information to the second MN according to the first information, where the second information includes index information of the terminal; and the first information and/or the second information indicate that the terminal has generated the first successful handover report.

In another embodiment provided in the present disclosure, the first successful handover report includes one of the following:
related information of the primary secondary cell;
related information of a primary cell accessed by the terminal and related information of the primary secondary cell accessed by the terminal.

In another embodiment of the present disclosure, the first information is carried by one or more of following messages:
an RRC connection establishment complete message;
an RRC connection re-establishment complete message;
an RRC connection reconfiguration complete message;
an RRC connection resume complete message.

In another embodiment of the present disclosure, the second information is a first interface message.

The first interface is a network interface between radio access network nodes.

In another embodiment provided in the present disclosure, the device further includes: a decoding unit, configured to decode the first successful handover report.

In another embodiment provided in the present disclosure, the device further includes: a seventh sending unit, configured to send to the second MN some or all of the information after the first successful handover report is decoded.

In another embodiment provided in the present disclosure, the device further includes: a seventh receiving unit, configured to receive a candidate primary secondary cell list and an execution condition corresponding to triggering the terminal to access a candidate primary secondary cell.

It should be noted that, the device provided in the embodiments of the present disclosure can implement all method steps implemented by the foregoing method embodiments applied to the SN, and can achieve the same technical effect, and details of the same parts and beneficial effects as those in the method embodiments in this embodiment are not described herein again.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

As shown in FIG. 8, an embodiment of the present disclosure further provides a device for processing a successful handover report, applied to a terminal and including: a memory 820, a transceiver 800, and a processor 810, wherein the memory 820 is configured to store a computer program; the transceiver 800 is configured to receive and send data under the control of the processor 810; and the processor 810 is configured to read the computer program in the memory and perform the following operations:
obtaining configuration information of a first trigger condition for generating a successful handover report of a primary secondary cell;
in case of addition of a secondary node SN accessed by the terminal or change of the primary secondary cell, generating a first successful handover report, according to the configuration information, when determining that the first trigger condition is met.

The transceiver 800 is configured to send the first successful handover report to a first MN accessed by a terminal.

In another embodiment of the present disclosure, the first trigger condition includes: that a current value of a timer is greater than a threshold of the timer when the terminal successfully accesses a first primary secondary cell.

In another embodiment provided in the present disclosure, the first successful handover report includes one of the following:
related information of the primary secondary cell;
related information of a primary cell accessed by the terminal and related information of the primary secondary cell accessed by the terminal;
related information of a primary cell accessed by the terminal.

In another embodiment of the present disclosure, the related information of the primary secondary cell includes one or more of the following:
a report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of accessing a first primary secondary cell by the terminal;
trigger node information in case of SN addition;
trigger node information during change of the primary secondary cell.

In another embodiment of the present disclosure, the processor is configured to read a computer program in the memory and perform the following operations:
when determining that the first trigger condition is met and when a second trigger condition of a successful handover report of the primary cell is met, recording related information of the primary cell; and
generating the first successful handover report according to the related information of the primary cell.

In another embodiment of the present disclosure, the processor is configured to read a computer program in the memory and perform one of the following operations:
if time of determining that the second trigger condition is met is earlier than time of determining that the first trigger condition is met, then recording the related information of the primary cell;
if time of determining that the first trigger condition is met is earlier than time of determining that the second trigger condition is met, then recording the related information of the primary secondary cell when the first trigger condition is met, and when the second trigger condition is met, recording the related information of the primary cell and deleting the related information of the primary secondary cell.

In another embodiment of the present disclosure, the transceiver is further configured to: send first information to a first target network node, wherein the first information indicates that the terminal has generated the first successful handover report; and
receiving a terminal information obtaining request message sent by a first MN;
sending a response message to the first MN, wherein the response message comprises the first successful handover report.

In another embodiment of the present disclosure, the first information is carried by one or more of following messages:
a radio resource control (RRC) connection establishment complete message;
an RRC connection re-establishment complete message;
an RRC connection reconfiguration complete message;
an RRC connection resume complete message.

In another embodiment provided in the present disclosure, the transceiver is specifically configured to perform one of the following:
sending the first information to the first MN;
if the change of the primary secondary cell is change of the primary secondary cell in the SN triggered by the SN, sending the first information to the SN;
if the change of the primary secondary cell is change of the primary secondary cell in the SN triggered by the SN, sending the first information to the first MN.

In another embodiment of the present disclosure, the first information is sent after the terminal successfully accesses a first primary secondary cell and generates the first successful handover report.

In another embodiment of the present disclosure, the processor is configured to read a computer program in the memory and perform the following operations:
encoding the first successful handover report according to an access technology of accessing a first MN by the terminal; or encoding the first successful handover report according to an access technology of accessing a target SN by the terminal; wherein the access technology of the first MN is same as or different from the access technology of the target SN.

In another embodiment of the present disclosure, the transceiver is further configured to: receive a conditional synchronization reconfiguration message, wherein the conditional synchronization reconfiguration message comprises a candidate primary secondary cell list and an execution condition corresponding to triggering the terminal to access a candidate primary secondary cell; the processor is configured to read the computer program in the memory and perform the following operations: performing the addition of the SN or the change of the primary secondary cell in a case that the execution condition is met.

In another embodiment provided in the present disclosure, the first successful handover report includes one or more of the following information:
the candidate primary secondary cell list;
the execution condition corresponding to triggering the terminal to access the candidate primary secondary cell;
time length information between first time and second time, the first time being time when the conditional synchronization reconfiguration message is received for last time before the execution condition is met, and the second time being time when determining that the execution condition is met.

In another embodiment provided in the present disclosure, the first successful handover report includes:
association information related to the first successful handover report;
identification information, wherein the identification information is used to indicate that the addition of the SN or the change of the primary secondary cell is implemented through a conditional synchronization reconfiguration.

In FIG. 8, the bus architecture may include any number of interconnected buses and bridges, and specifically, various circuits of one or more processors represented by the processor 810 and a memory represented by the memory 820 are linked together. The bus architecture may also link various other circuits, such as a peripheral device, a voltage regulator, and a power management circuit, which are well known in the art, and therefore are not further described herein. The bus interface provides an interface. The transceiver 800 may be a plurality of elements, that is, includes a transmitter and a transceiver, and provides a unit for communicating with various other apparatuses on a transmission medium. For different user equipment, the user interface 830 may also be an interface capable of being externally connected to an internal required device, and the connected device includes but is not limited to a keypad, a display, a speaker, a microphone, a joystick, and the like.

The processor 810 is responsible for managing the bus architecture and general processing, and the memory 820 may store data used by the processor 810 when performing operations.

Optionally, the processor 810 may be a Central Processing Unit (CPU), an Application Specific Integrated Circuit (ASIC), a Field-Programmable Gate Array (FPGA), or a Complex Programmable Logic Device (CPLD), and the processor may also use a multi-core architecture.

The processor is configured to invoke the computer program stored in the memory, to perform any one of the methods provided in the embodiments of the present disclosure according to the obtained executable instruction. The processor and the memory may also be physically separated.

It should be noted that the above-mentioned apparatus provided in the embodiments of the present disclosure can implement all method steps implemented by the above method embodiments applied to the terminal, and can achieve the same technical effect, which will not be specifically described in detail in the same parts and beneficial effects of the method embodiments in this embodiment.

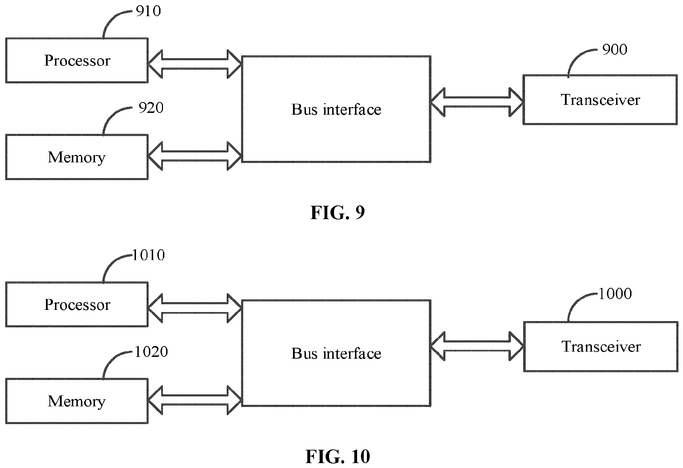

As shown in FIG. 9, an embodiment of the present disclosure further provides a device for processing a successful handover report, applied to a second MN. The device includes: a memory 920, a transceiver 900, and a processor 910, wherein the memory 920 is configured to store a computer program; the transceiver 900 is configured to receive and send data under the control of the processor 910; and the processor 910 is configured to read the computer program in the memory and perform the following operations:
obtaining a first successful handover report, wherein the first successful handover report is generated by a terminal in case of addition of a SN accessed by the terminal or change of a primary secondary cell and when a first trigger condition is met;
determining, according to a trigger reason of the first successful handover report, a second target network node that needs to perform optimization; wherein the transceiver 900 is configured to send the first successful handover report to the second target network node; and the second MN is an MN accessed when the terminal generates the first successful handover report.

In another embodiment provided in the present disclosure, the transceiver is further configured to perform one of the following operations:
receiving the first successful handover report sent by the terminal;
receiving the first successful handover report sent by the first MN, where the first MN is an MN accessed when the terminal reports the first successful handover report.

In another embodiment provided in the present disclosure, the first successful handover report includes one of the following:
related information of the primary secondary cell;
related information of a primary cell accessed by the terminal and related information of a primary secondary cell;
related information of a primary cell accessed by the terminal.

In another embodiment of the present disclosure, the related information of the primary secondary cell includes one or more of the following:
report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of the terminal accessing the first primary secondary cell;
trigger node information in case of SN addition;
trigger node information during change of the primary secondary cell.

In another embodiment of the present disclosure, the processor is configured to read a computer program in the memory and perform one of the following operations:
if the trigger reason of the first successful handover report is that timing time of a first timer is greater than a threshold of the first timer, determining that the second target network node comprises one or more of the following: a trigger node for the addition of the SN or the change of the primary secondary cell, a target SN accessed by the terminal;
if the trigger reason of the first successful handover report is that timing time of a second timer is greater than a threshold of the second timer, determining that the second target network node comprises one or more of the following: a trigger node for the addition of the SN or the change of the primary secondary cell, a source SN accessed by the terminal before the change of the primary secondary cell, and a third MN accessed by the terminal when triggering the addition of the SN or the change of the primary secondary cell;
if the trigger reason of the first successful handover report is that timing time of a third timer is greater than a threshold of the third timer, determining that the second target network node is a node triggering the addition of the SN or the change of the primary secondary cell.

In another embodiment of the present disclosure, the transceiver is configured for:
sending a terminal information acquisition request message to the terminal;
receiving a response message sent by the terminal, wherein the response message comprises the first successful handover report.

In another embodiment of the present disclosure, the transceiver is further configured for:
receiving first information sent by a terminal;
   or
receiving second information sent by an SN node, wherein the second information is sent after the SN node receives the first information sent by the terminal, and the second information includes index information of the terminal; and the first information and/or the second information indicate that the terminal has generated the first successful handover report.

In another embodiment of the present disclosure, the first information is carried by one or more of following messages:
a RRC connection establishment complete message;
an RRC connection re-establishment complete message;
an RRC connection reconfiguration complete message;
an RRC connection resume complete message.

In another embodiment of the present disclosure, the transceiver is configured to:
reuse a transmission message of a first interface and/or a second interface to send the first successful handover report to the second target network node; wherein the first interface is a network interface between radio access network nodes, and the second interface is a network interface between a radio access network node and a core network node.

In another embodiment provided in the present disclosure, the first successful handover report includes one or more of the following information:
a candidate primary secondary cell list;
an execution condition corresponding to triggering the terminal to access a candidate primary secondary cell;
time length information between first time and second time, the first time being time when the conditional synchronization reconfiguration message is received for last time before the execution condition is met, and the second time being time when determining that the execution condition is met.

In another embodiment provided in the present disclosure, the first successful handover report includes:
association information related to the first successful handover report;
identification information, wherein the identification information is used to indicate that the addition of the SN or the change of the primary secondary cell is implemented through a conditional synchronization reconfiguration.

In another embodiment of the present disclosure, the processor is configured to read a computer program in the memory and perform the following operations:
searching, according to the association information, a candidate primary secondary cell list corresponding to the first successful handover report and/or an execution condition corresponding to triggering the terminal to access a candidate primary secondary cell; the transceiver is configured to send, to the second target network node, the candidate primary secondary cell list and/or the execution condition corresponding to triggering the terminal to access the candidate primary secondary cell.

In another embodiment of the present disclosure, the transceiver is further configured to: send a conditional synchronization reconfiguration message to the terminal, wherein the conditional synchronization reconfiguration message includes the candidate primary secondary cell list and the execution condition corresponding to triggering the terminal to access the candidate primary secondary cell.

In another embodiment of the present disclosure, the transceiver is configured to: send an un-decoded first successful handover report to the second target network node; or the processor is configured to: decode the first successful handover report; and the transceiver is configured to send the decoded first successful handover report to the second target network node.

In another embodiment of the present disclosure, the transceiver is further configured to: receive some or all of information of the decoded first successful handover report sent by the second target network node.

In FIG. 9, the bus architecture may include any number of interconnected buses and bridges, and specifically, various circuits of one or more processors represented by the processor 910 and a memory represented by the memory 920 are linked together. The bus architecture may also link various other circuits, such as a peripheral device, a voltage regulator, and a power management circuit, which are well known in the art, and therefore are not further described herein. The bus interface provides an interface. The transceiver 900 may be a plurality of elements, that is, includes a transmitter and a transceiver, and provides a unit for communicating with various other apparatuses on a transmission medium. The processor 910 is responsible for managing the bus architecture and general processing, and the memory 920 May store data used by the processor 910 when performing operations.

The processor 910 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

It should be noted that, the above apparatus provided in the embodiments of the present disclosure can implement all method steps implemented by the method embodiments applied to the second MN, and can achieve the same technical effect, which will not be specifically described in detail in this embodiment and the beneficial effects that are the same as those in the method embodiment.

As shown in FIG. 10, an embodiment of the present disclosure further provides a device for processing a successful handover report, which is applied to an SN and includes: a memory 1020, a transceiver 1000, and a processor 1010, wherein the memory 1020 is configured to store a computer program; the transceiver 1000 is configured to receive and send data under the control of the processor 1010; and the processor 1010 is configured to read the computer program in the memory and perform the following operations:
receiving a first successful handover report sent by a second MN;
performing network optimization according to the first successful handover report;
wherein the first successful handover report is generated in case of addition of a SN accessed by a terminal or change of a primary secondary cell and when a first trigger condition is met. The second MN is the MN accessed by the terminal when the terminal generates the first successful handover report.

In another embodiment of the present disclosure, the transceiver is further configured to:
receive first information sent by the terminal;
send second information to the second MN according to the first information, wherein the second information includes index information of the terminal; wherein the first information and/or the second information indicate that the terminal has generated the first successful handover report.

In another embodiment provided in the present disclosure, the first successful handover report includes one of the following: related information of the primary secondary cell; related information of a primary cell accessed by the terminal and related information of the primary secondary cell accessed by the terminal.

In another embodiment of the present disclosure, the first information is carried by one or more of following messages:
a radio resource control (RRC) connection establishment complete message;
an RRC connection re-establishment complete message;
an RRC connection reconfiguration complete message;
an RRC connection resume complete message.

In another embodiment of the present disclosure, the second information is a first interface message; the first interface is a network interface between radio access network nodes.

In another embodiment of the present disclosure, the processor is configured to read a computer program in the memory and perform the following operations: decoding the first successful handover report.

In another embodiment of the present disclosure, the transceiver is further configured to: send, to the second MN, some or all of information of the decoded first successful handover report..

In another embodiment of the present disclosure, the transceiver is further configured to: receive, from the second MN, a candidate primary secondary cell list and an execution condition corresponding to triggering the terminal to access a candidate primary secondary cell.

In FIG. 10, the bus architecture may include any number of interconnected buses and bridges, and specifically, various circuits of one or more processors represented by the processor 1010 and a memory represented by the memory 1020 are linked together. The bus architecture may also link various other circuits, such as a peripheral device, a voltage regulator, and a power management circuit, which are well known in the art, and therefore are not further described herein. The bus interface provides an interface. The transceiver 1000 may be a plurality of elements, that is, includes a transmitter and a transceiver, and provides a unit for communicating with various other apparatuses on a transmission medium. The processor 1010 is responsible for managing the bus architecture and general processing, and the memory 1020 may store data used by the processor 1010 when performing operations.

The processor 1010may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

It should be noted that, the device provided in the embodiments of the present disclosure can implement all method steps implemented by the foregoing method embodiments applied to the SN, and can achieve the same technical effect, and details of the same parts and beneficial effects as those in the method embodiments in this embodiment are not described herein again.

In addition, an embodiment of the present disclosure further provides a processor-readable storage medium, on which a computer program is stored, wherein when the program is executed by the processor, the steps of the processing method for a successful handover report are implemented, and the same technical effect can be achieved. The readable storage medium may be any usable medium or data storage device accessible by the processor, including but not limited to a magnetic memory (for example, a floppy disk, a hard disk, a magnetic tape, a magneto-optical disk (MO), etc.), an optical memory (for example, a compact disk (CD), a digital versatile disk (DVD), Blu-ray disk (BD), High-Definition Versatile Disk (HVD), etc.), and semiconductor memory (e.g. ROM, Erasable Programmable Read-Only Memory (EPROM), Electrically Erasable Programmable Read Only Memory (EEPROM), Non-Volatile Memory (NAND Flash), Solid State Disk (SSD), etc.

It should be noted that the technical solutions provided in the embodiments of the present disclosure may be applicable to various systems, especially 5G systems. For example, the applicable system may be a global system of mobile communication (GSM) system, a code division multiple access (CDMA) system, a wideband code division multiple access (WCDMA) general packet radio service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), A Worldwide Interoperability for Microwave Access (Worldwide Interoperability for Microwave Access) system, a 5G New Radio (NR) system, and the like. The plurality of systems each include a terminal device and a network device. The system may further include a core network part, for example, an Evolved Packet System (EPS), a 5G system (5 GS), and the like.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

A network device, for example, an MN and an SN, in the embodiments of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a Base Transceiver Station (BTS) in a Global System for Mobile Communications (GSM) or a Code Division Multiple Access (Code Division Multiple Access, CDMA), or may be a network device in a Wide-Band Code Division Multiple Access (WCDMA), The embodiment of the present disclosure is not limited in the embodiments of the present disclosure, but may also be an evolved network device in a Long Term Evolution (LTE) system, a 5G base station in a 5G Network Architecture (Next Generation System), a Home Evolved Node B, a Relay Node, a Femto, a Pico Base Station (Pico), etc. which is not limited in the embodiments of the present disclosure. In some network structures, the network device may include a centralized unit (CU) node and a distributed unit (DU) node, and the centralized unit and the distribution unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). The MIMO transmission may be a two-dimensional MIMO antenna (2D-MIMO), a three-dimensional MIMO antenna (3D-MIMO), a full dimension MIMO antenna (full dimension, FD-MIMO) or a super-large-scale MIMO antenna (Massive-MIMO), or may be diversity transmission or precoding transmission or beamforming transmission, according to the form and quantity of the root antenna combination.

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general purpose computer, special purpose computer, embedded processor, or other programmable data processing apparatus to produce a machine, such that the instructions executed by the processor of the computer or other programmable data processing apparatus generate means for implementing the functions specified in one or more flows and/or block diagrams in the flowchart.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing apparatus, such that a series of operational steps are performed on the computer or other programmable apparatus to produce a computer-implemented process, such that the instructions executing on the computer or other programmable apparatus provide steps for implementing the functions specified in one or more flows of the flowchart and/or one or more blocks of the block diagram.

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. A method for processing a successful handover report, comprising:
obtaining, by a terminal, configuration information of a first trigger condition for generating a successful handover report of a primary secondary cell;
in case of addition of a secondary node SN accessed by the terminal or change of the primary secondary cell, generating a first successful handover report, according to the configuration information, when determining that the first trigger condition is met; and
sending the first successful handover report to a first master node MN accessed by the terminal.

2. The method according to claim 1, wherein the first trigger condition comprises:
that a current value of a timer is greater than a threshold of the timer when the terminal successfully accesses a first primary secondary cell.

3. The method according to claim 1, wherein the first successful handover report comprises one of the following:
related information of the primary secondary cell;
related information of a primary cell accessed by the terminal and related information of the primary secondary cell accessed by the terminal;
related information of a primary cell accessed by the terminal.

4. The method according to claim 3, wherein the related information of the primary secondary cell comprises one or more of the following:
a report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of accessing a first primary secondary cell by the terminal;
trigger node information in case of SN addition;
trigger node information during change of the primary secondary cell.

5. The method according to claim 3, wherein generating the first successful handover report when determining that the first trigger condition is met comprises:
when determining that the first trigger condition is met and when a second trigger condition of a successful handover report of the primary cell is met, recording related information of the primary cell; and
generating the first successful handover report according to the related information of the primary cell.

6. The method according to claim 5, wherein when determining that the first trigger condition is met and the second trigger condition of the successful handover report of the primary cell is met, recording the related information of the primary cell comprises one of the following:
if time of determining that the second trigger condition is met is earlier than time of determining that the first trigger condition is met, then recording the related information of the primary cell;
if time of determining that the first trigger condition is met is earlier than time of determining that the second trigger condition is met, then recording the related information of the primary secondary cell when the first trigger condition is met, and when the second trigger condition is met, recording the related information of the primary cell and deleting the related information of the primary secondary cell.

7. The method according to claim 1, wherein after generating the first successful handover report, the method further comprises:
sending first information to a first target network node, wherein the first information indicates that the terminal has generated the first successful handover report;
the sending the first successful handover report to the first master node MN accessed by the terminal comprises:
receiving a terminal information obtaining request message sent by a first MN;
sending a response message to the first MN, wherein the response message comprises the first successful handover report.

8. The method according to claim 7, wherein the first information is carried by one or more of following messages:
a radio resource control (RRC) connection establishment complete message;
an RRC connection re-establishment complete message;
an RRC connection reconfiguration complete message;
an RRC connection resume complete message.

9. The method according to claim 7, wherein the sending the first information to the first target network node comprises one of the following:
sending the first information to the first MN;
if the change of the primary secondary cell is change of the primary secondary cell in the SN triggered by the SN, sending the first information to the SN;
if the change of the primary secondary cell is change of the primary secondary cell in the MN triggered by the MN, sending the first information to the first MN.

10. The method according to any one of claims 7 to 9, wherein the first information is sent after the terminal successfully accesses a first primary secondary cell and generates the first successful handover report.

11. The method according to claim 1, wherein after generating the first successful handover report, the method further comprises:
encoding the first successful handover report according to an access technology of accessing a first MN by the terminal; or
encoding the first successful handover report according to an access technology of accessing a target SN by the terminal;
wherein the access technology of the first MN is same as or different from the access technology of the target SN.

12. The method according to claim 1, wherein the method further comprises:
receiving a conditional synchronization reconfiguration message, wherein the conditional synchronization reconfiguration message comprises a candidate primary secondary cell list and an execution condition corresponding to triggering the terminal to access a candidate primary secondary cell;
performing the addition of the SN or the change of the primary secondary cell in a case that the execution condition is met.

13. The method according to claim 12, wherein the first successful handover report comprises one or more of the following information:
the candidate primary secondary cell list;
the execution condition corresponding to triggering the terminal to access the candidate primary secondary cell;
time length information between first time and second time, the first time being time when the conditional synchronization reconfiguration message is received for last time before the execution condition is met, and the second time being time when determining that the execution condition is met.

14. The method according to claim 12, wherein the first successful handover report comprises:
association information related to the first successful handover report;
identification information, wherein the identification information is used to indicate that the addition of the SN or the change of the primary secondary cell is implemented through a conditional synchronization reconfiguration.

15. A method for processing a successful handover report, comprising:
obtaining, by a second MN, a first successful handover report, wherein the first successful handover report is generated by a terminal in case of addition of a SN accessed by the terminal or change of a primary secondary cell and when a first trigger condition is met;
determining, by the second MN according to a trigger reason of the first successful handover report, a second target network node that needs to perform optimization; and
sending, by the second MN, the first successful handover report to the second target network node.

16. The method according to claim 15, wherein the obtaining a first successful handover report comprises one of the following:
receiving the first successful handover report sent by the terminal;
receiving the first successful handover report sent by the first MN.

17. The method according to claim 15, wherein the first successful handover report comprises one of the following:
related information of the primary secondary cell;
related information of a primary cell accessed by the terminal and related information of a primary secondary cell;
related information of a primary cell accessed by the terminal.

18. The method according to claim 17, wherein the related information of the primary secondary cell comprises one or more of the following:
report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of the terminal accessing the first primary secondary cell;
trigger node information in case of SN addition;
trigger node information during change of the primary secondary cell.

19. The method according to claim 15, wherein determining, by the second MN according to the trigger reason of the first successful handover report, the second target network node that needs to perform optimization comprises one of the following:
if the trigger reason of the first successful handover report is that timing time of a first timer is greater than a threshold of the first timer, determining that the second target network node comprises one or more of the following: a trigger node for the addition of the SN or the change of the primary secondary cell, a target SN accessed by the terminal;
if the trigger reason of the first successful handover report is that timing time of a second timer is greater than a threshold of the second timer, determining that the second target network node comprises one or more of the following: a trigger node for the addition of the SN or the change of the primary secondary cell, a source SN accessed by the terminal before the change of the primary secondary cell, and a third MN accessed by the terminal when triggering the addition of the SN or the change of the primary secondary cell;
if the trigger reason of the first successful handover report is that timing time of a third timer is greater than a threshold of the third timer, determining that the second target network node is a node triggering the addition of the SN or the change of the primary secondary cell.

20. The method according to claim 16, wherein receiving the first successful handover report sent by the terminal comprises:
sending a terminal information acquisition request message to the terminal;
receiving a response message sent by the terminal, wherein the response message comprises the first successful handover report.

21. The method according to claim 20, wherein before sending the terminal information acquisition request message to the terminal, the method further comprises:
receiving first information sent by a terminal;
or
receiving second information sent by an SN node, wherein the second information is sent after the SN node receives the first information sent by the terminal, and the second information comprises index information of the terminal; and
the first information and/or the second information indicate that the terminal has generated the first successful handover report.

22. The method according to claim 21, wherein the first information is carried by one or more of following messages:
a radio resource control (RRC) connection establishment complete message;
an RRC connection re-establishment complete message;
an RRC connection reconfiguration complete message;
an RRC connection resume complete message..

23. The method according to claim 15, wherein the sending the first successful handover report to the second target network node comprises:
reusing a transmission message of a first interface and/or a second interface to send the first successful handover report to the second target network node;
wherein the first interface is a network interface between radio access network nodes, and the second interface is a network interface between a radio access network node and a core network node.

24. The method according to claim 15, wherein the first successful handover report comprises one or more of the following information:
a candidate primary secondary cell list;
an execution condition corresponding to triggering the terminal to access a candidate primary secondary cell;
time length information between first time and second time, the first time being time when the conditional synchronization reconfiguration message is received for last time before the execution condition is met, and the second time being time when determining that the execution condition is met.

25. The method according to claim 15, wherein the first successful handover report comprises:
association information related to the first successful handover report;
identification information, wherein the identification information is used to indicate that the addition of the SN or the change of the primary secondary cell is implemented through a conditional synchronization reconfiguration.

26. The method according to claim 25, wherein the method further comprises:
searching, according to the association information, a candidate primary secondary cell list corresponding to the first successful handover report and/or an execution condition corresponding to triggering the terminal to access a candidate primary secondary cell;
sending, to the second target network node, the candidate primary secondary cell list and/or the execution condition corresponding to triggering the terminal to access the candidate primary secondary cell.

27. The method according to claim 24 or 25, wherein the method further comprises:
sending a conditional synchronization reconfiguration message to the terminal, wherein the conditional synchronization reconfiguration message comprises the candidate primary secondary cell list and the execution condition corresponding to triggering the terminal to access the candidate primary secondary cell.

28. The method according to claim 15, wherein the sending the first successful handover report to the second target network node comprises:
sending an un-decoded first successful handover report to the second target network node; or
decoding the first successful handover report; and sending the decoded first successful handover report to the second target network node.

29. The method according to claim 28, wherein the method further comprises:
receiving some or all of information of the decoded first successful handover report sent by the second target network node.

30. A method for processing a successful handover report, comprising:
receiving, by a secondary node SN, a first successful handover report sent by a second MN;
performing network optimization according to the first successful handover report;
wherein the first successful handover report is generated in case of addition of a SN accessed by a terminal or change of a primary secondary cell and when a first trigger condition is met.

31. The method according to claim 30, wherein before receiving the first successful handover report sent by the second MN, the method further comprises:
receiving first information sent by the terminal;
sending second information to the second MN according to the first information, wherein the second information comprises index information of the terminal;
wherein the first information and/or the second information indicate that the terminal has generated the first successful handover report.

32. The method according to claim 30, wherein the first successful handover report comprises one of the following:
related information of the primary secondary cell;
related information of a primary cell accessed by the terminal and related information of the primary secondary cell accessed by the terminal.

33. The method according to claim 31, wherein the first information is carried by one or more of following messages:
a radio resource control (RRC) connection establishment complete message;
an RRC connection re-establishment complete message;
an RRC connection reconfiguration complete message;
an RRC connection resume complete message.

34. The method according to claim 31, wherein the second information is a first interface message;
the first interface is a network interface between radio access network nodes.

35. The method according to claim 30, wherein after receiving the first successful handover report sent by the MN, the method comprises:
decoding the first successful handover report.

36. The method according to claim 35, wherein the method further comprises:
sending, to the second MN, some or all of information of the decoded first successful handover report.

37. The method according to claim 30, wherein the method further comprises:
receiving, from the second MN, a candidate primary secondary cell list and an execution condition corresponding to triggering the terminal to access a candidate primary secondary cell.

38. A device for processing a successful handover report, comprising a memory, a transceiver, and a processor,
wherein the memory is configured to store a computer program, the transceiver is configured to receive and send data under the control of the processor; and the processor is configured to read the computer program in the memory and perform the following operations:
obtaining configuration information of a first trigger condition for generating a successful handover report of a primary secondary cell;
in case of addition of a secondary node SN accessed by a terminal or change of the primary secondary cell, generating a first successful handover report, according to the configuration information, when determining that the first trigger condition is met;
wherein the transceiver is configured to send the first successful handover report to a first master node MN accessed by the terminal.

39. The device according to claim 38, wherein the first trigger condition comprises:
that a current value of a timer is greater than a threshold of the timer when the terminal successfully accesses a first primary secondary cell.

40. The device according to claim 38, wherein the first successful handover report comprises one of the following:
related information of the primary secondary cell;
related information of a primary cell accessed by the terminal and related information of the primary secondary cell accessed by the terminal;
related information of a primary cell accessed by the terminal.

41. The device according to claim 40, wherein the related information of the primary secondary cell comprises one or more of the following:
a report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of accessing a first primary secondary cell by the terminal;
trigger node information in case of SN addition;
trigger node information during change of the primary secondary cell.

42. The device according to claim 40, wherein the processor is configured to read the computer program in the memory and perform the following operations:
when determining that the first trigger condition is met and when a second trigger condition of a successful handover report of the primary cell is met, recording related information of the primary cell;
generating the first successful handover report according to the related information of the primary cell.

43. The device according to claim 42, wherein the processor is configured to read the computer program in the memory and perform one of the following operations:
if time of determining that the second trigger condition is met is earlier than time of determining that the first trigger condition is met, then recording the related information of the primary cell;
if time of determining that the first trigger condition is met is earlier than time of determining that the second trigger condition is met, then recording the related information of the primary secondary cell when the first trigger condition is met, and when the second trigger condition is met, recording the related information of the primary cell and deleting the related information of the primary secondary cell.

44. The device according to claim 38, wherein the transceiver is further configured to:
send first information to a first target network node, wherein the first information indicates that the terminal has generated the first successful handover report;
receive a terminal information obtaining request message sent by the first MN;
send a response message to the first MN, wherein the response message comprises the first successful handover report.

45. The device according to claim 44, wherein the first information is carried by one or more of following messages:
a radio resource control (RRC) connection establishment complete message;
an RRC connection re-establishment complete message;
an RRC connection reconfiguration complete message;
an RRC connection resume complete message.

46. The device according to claim 44, wherein the transceiver is specifically configured to perform one of the following:
send the first information to the first MN;
if the change of the primary secondary cell is change of the primary secondary cell in the SN triggered by the SN, sending the first information to the SN;
if the change of the primary secondary cell is change of the primary secondary cell in the MN triggered by the MN, sending the first information to the first MN.

47. The device according to any one of claims 44 to 46, wherein the first information is sent after the terminal successfully accesses a first primary secondary cell and generates the first successful handover report.

48. The device according to claim 38, wherein the processor is configured to read the computer program in the memory and perform the following operations:
encoding the first successful handover report according to an access technology of accessing a first MN by the terminal; or
encoding the first successful handover report according to an access technology of accessing a target SN by the terminal;
wherein the access technology of the first MN is same as or different from the access technology of the target SN.

49. The device according to claim 38, wherein the transceiver is further configured to:
receive a conditional synchronization reconfiguration message, wherein the conditional synchronization reconfiguration message comprises a candidate primary secondary cell list and an execution condition corresponding to triggering the terminal to access a candidate primary secondary cell;
the processor is configured to read the computer program in the memory and perform the following operations:
performing the addition of the SN or the change of the primary secondary cell in a case that the execution condition is met.

50. The device according to claim 49, wherein the first successful handover report comprises one or more of the following information:
the candidate primary secondary cell list;
the execution condition corresponding to triggering the terminal to access the candidate primary secondary cell;
time length information between first time and second time, the first time being time when the conditional synchronization reconfiguration message is received for last time before the execution condition is met, and the second time being time when determining that the execution condition is met.

51. The device according to claim 49, wherein the first successful handover report comprises:
association information related to the first successful handover report;
identification information, wherein the identification information is used to indicate that the addition of the SN or the change of the primary secondary cell is implemented through a conditional synchronization reconfiguration.

52. A device for processing a successful handover report, comprising a memory, a transceiver, and a processor,
wherein the memory is configured to store a computer program; the transceiver is configured to receive and send data under the control of the processor; and the processor is configured to read the computer program in the memory and perform the following operations:
obtaining a first successful handover report, wherein the first successful handover report is generated by a terminal in case of addition of a SN accessed by the terminal or change of a primary secondary cell and when a first trigger condition is met;
determining, according to a trigger reason of the first successful handover report, a second target network node that needs to perform optimization;
wherein the transceiver is configured to send the first successful handover report to the second target network node.

53. A device for processing a successful handover report, comprising a memory, a transceiver, and a processor,
wherein the memory is configured to store a computer program; the transceiver is configured to receive and send data under the control of the processor; and the processor is configured to read the computer program in the memory and perform the following operations:
receiving a first successful handover report sent by a second MN;
performing network optimization according to the first successful handover report;
wherein the first successful handover report is generated in case of addition of a SN accessed by a terminal or change of a primary secondary cell and when a first trigger condition is met.

54. A device for processing a successful handover report, comprising:
a first obtaining unit, configured to obtain configuration information of a first trigger condition for generating a successful handover report of a primary secondary cell;
a first processing unit, configured to in case of addition of a secondary node SN accessed by a terminal or change of the primary secondary cell, generate a first successful handover report, according to the configuration information, when determining that the first trigger condition is met; and
a first sending unit, configured to send the first successful handover report to a first master node MN accessed by the terminal.

55. The device according to claim 54, wherein the first trigger condition comprises:
that a current value of a timer is greater than a threshold of the timer when the terminal successfully accesses a first primary secondary cell.

56. The device according to claim 54, wherein the first successful handover report comprises one of the following:
related information of the primary secondary cell;
related information of a primary cell accessed by the terminal and related information of the primary secondary cell accessed by the terminal;
related information of a primary cell accessed by the terminal.

57. The device according to claim 56, wherein the related information of the primary secondary cell comprises one or more of the following:
a report triggering reason;
a cell identifier of a second primary secondary cell accessed by the terminal;
a measurement result of a second primary secondary cell accessed by the terminal;
a cell identifier of a first primary secondary cell accessed by the terminal;
a measurement result of a first primary secondary cell accessed by the terminal;
a measurement result of a neighboring cell of a first primary secondary cell accessed by the terminal;
random access information of accessing a first primary secondary cell by the terminal;
trigger node information in case of SN addition;
trigger node information during change of the primary secondary cell.

58. The device according to claim 56, wherein the first processing unit is specifically configured to:
when determining that the first trigger condition is met and when a second trigger condition of a successful handover report of the primary cell is met, record related information of the primary cell;
generate the first successful handover report according to the related information of the primary cell.

59. The device according to claim 58, wherein the first processing unit is specifically configured to perform one of the following:
if time of determining that the second trigger condition is met is earlier than time of determining that the first trigger condition is met, then recording the related information of the primary cell;
if time of determining that the first trigger condition is met is earlier than time of determining that the second trigger condition is met, then recording the related information of the primary secondary cell when the first trigger condition is met, and when the second trigger condition is met, recording the related information of the primary cell and deleting the related information of the primary secondary cell.

60. The device according to claim 54, wherein the device further comprises:
a third sending unit, configured to send first information to a first target network node, wherein the first information indicates that the terminal has generated the first successful handover report;
a second receiving unit, configured to receive a terminal information obtaining request message sent by a first MN;
the first sending unit is specifically configured to send a response message to the first MN, wherein the response message comprises the first successful handover report.

61. The device according to claim 60, wherein the first information is carried by one or more of following messages:
a radio resource control (RRC) connection establishment complete message;
an RRC connection re-establishment complete message;
an RRC connection reconfiguration complete message;
an RRC connection resume complete message.

62. The device according to claim 60, wherein the third sending unit is specifically configured to perform one of the following:
sending the first information to the first MN;
if the change of the primary secondary cell is change of the primary secondary cell in the SN triggered by the SN, sending the first information to the SN;
if the change of the primary secondary cell is change of the primary secondary cell in the MN triggered by the MN, sending the first information to the first MN.

63. The device according to any one of claims 60 to 62, wherein the first information is sent after the terminal successfully accesses a first primary secondary cell and generates the first successful handover report.

64. The device according to claim 54, wherein the device further comprises an encoding unit; and the encoding unit is specifically configured to:
encode the first successful handover report according to an access technology of accessing a first MN by the terminal; or
encode the first successful handover report according to an access technology of accessing a target SN by the terminal;
wherein the access technology of the first MN is same as or different from the access technology of the target SN.

65. The device according to claim 54, wherein the device further comprises:
a third receiving unit, configured to receive a conditional synchronization reconfiguration message, wherein the conditional synchronization reconfiguration message comprises a candidate primary secondary cell list and an execution condition corresponding to triggering the terminal to access a candidate primary secondary cell; and
a first execution unit, configured to perform the addition of the SN or the change of the primary secondary cell in a case that the execution condition is met.

66. The device according to claim 65, wherein the first successful handover report comprises one or more of the following information:
the candidate primary secondary cell list;
the execution condition corresponding to triggering the terminal to access the candidate primary secondary cell;
time length information between first time and second time, the first time being time when the conditional synchronization reconfiguration message is received for last time before the execution condition is met, and the second time being time when determining that the execution condition is met.

67. The device according to claim 65, wherein the first successful handover report comprises:
association information related to the first successful handover report;
identification information, wherein the identification information is used to indicate that the addition of the SN or the change of the primary secondary cell is implemented through a conditional synchronization reconfiguration.

68. A device for processing a successful handover report, comprising:
a second obtaining unit, configured to obtain a first successful handover report, wherein the first successful handover report is generated by a terminal in case of addition of a SN accessed by the terminal or change of a primary secondary cell and when a first trigger condition is met;
a first determining unit, configured to determine, according to a trigger reason of the first successful handover report, a second target network node that needs to perform optimization; and
a second sending unit, configured to send the first successful handover report to the second target network node.

69. A device for processing a successful handover report, comprising:
a first receiving unit, configured to receive a first successful handover report sent by a second MN;
a second processing unit, configured to perform network optimization according to the first successful handover report;
wherein the first successful handover report is generated in case of addition of a SN accessed by a terminal or change of a primary secondary cell and when a first trigger condition is met.

70. A processor-readable storage medium having a computer program stored thereon, wherein the computer program, when executed by a processor, implements the steps of the method for processing a successful handover report according to any one of claims 1 to 14, or implements the steps of the method for processing a successful handover report according to any one of claims 15 to 29, or implements the steps of the method for processing a successful handover report according to any one of claims 30 to 37.
